(19) Europäisches Patentamt
European Patent Office
Office européen des brevets

(11) **EP 4 530 926 A1**

(12) **EUROPEAN PATENT APPLICATION**

(43) Date of publication:
**02.04.2025 Bulletin 2025/14**

(21) Application number: **24203127.6**

(22) Date of filing: **27.09.2024**

(51) International Patent Classification (IPC):
**G06N 3/045** (2023.01)          **G06N 3/0475** (2023.01)
**G06N 3/094** (2023.01)

(52) Cooperative Patent Classification (CPC):
**G06N 3/0475; G06N 3/045; G06N 3/094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023169711**

(71) Applicant: **Rakuten Group, Inc.**
**Setagaya-ku**
**Tokyo 158-0094 (JP)**

(72) Inventors:
• **CHAE, Yeongnam**
  **Tokyo, 158-0094 (JP)**
• **LEE, Sehyung**
  **Tokyo, 158-0094 (JP)**

(74) Representative: **Hoffmann Eitle**
**Patent- und Rechtsanwälte PartmbB**
**Arabellastraße 30**
**81925 München (DE)**

(54) **LEARNING SYSTEM, LEARNING METHOD, AND PROGRAM**

(57)     A discrimination image acquisition module (101) acquires, for each feature relating to a generated image generated by a GAN, an anchor discrimination image, a positive discrimination image changed in this feature from the anchor discrimination image, and a negative discrimination image changed in another feature from the anchor discrimination image. A discrimination vector calculation module (102) calculates, for each feature space corresponding to each of the plurality of features, based on a discriminator of the GAN, an anchor discrimination vector relating to the anchor discrimination image of this feature, a positive discrimination vector relating to the positive discrimination image of this feature, and a negative discrimination vector relating to the negative discrimination image of this feature. A discriminator learning module (104) executes learning of the discriminator such that, in the feature space corresponding to each of the plurality of features, the anchor discrimination vector and the positive discrimination vector approach each other, and the anchor discrimination vector and the negative discrimination vector become distant from each other.

FIG.3

**Description**

BACKGROUND OF THE INVENTION

Field of the Invention

The present disclosure relates to a learning system, a learning method, and a program.

Description of the Related Art

Hitherto, a generative adversarial network (GAN) which generates an image has been known in the field of machine learning. The image generated by the GAN is hereinafter referred to as "generated image." For example, in Tero Karras, Miika Aittala, Samuli Laine, Erik Harkonen, Janne Hellsten, Jaakko Lehtinen, and Timo Aila, Alias-free generative adversarial networks, Advances in Neural Information Processing Systems, 34:852-863, 2021, Tero Karras, Samuli Laine, and Timo Aila, A style-based generator architecture for generative adversarial networks, in Proceedings of the IEEE/CVF conference on computer vision and pattern recognition, pages 4401-4410, 2019, and Tero Karras, Samuli Laine, Miika Aittala, Janne Hellsten, Jaakko Lehtinen, and Timo Aila, Analyzing and improving the image quality of StyleGAN, in Proceedings of the IEEE/CVF conference on computer vision and pattern recognition, pages 8110-8119, 2020, there is described a GAN which allows a user to control a plurality of features (for example, a degree of smile, an age, and a hairstyle) relating to the generated image. When the user specifies a desired feature, a latent code generated based on this specified feature is input to a generator of a trained GAN. The generator generates, based on the latent code, a generated image having the feature desired by the user.

However, for the technology of each of Tero Karras, Miika Aittala, Samuli Laine, Erik Harkonen, Janne Hellsten, Jaakko Lehtinen, and Timo Aila, Alias-free generative adversarial networks, Advances in Neural Information Processing Systems, 34:852-863, 2021, Tero Karras, Samuli Laine, and Timo Aila, A style-based generator architecture for generative adversarial networks, in Proceedings of the IEEE/CVF conference on computer vision and pattern recognition, pages 4401-4410, 2019, and Tero Karras, Samuli Laine, Miika Aittala, Janne Hellsten, Jaakko Lehtinen, and Timo Aila, Analyzing and improving the image quality of StyleGAN, in Proceedings of the IEEE/CVF conference on computer vision and pattern recognition, pages 8110-8119, 2020, in order to prepare training data for training the GAN, it is required for a creator who creates the GAN to prepare a pre-trained model to label the training data or to manually label the training data, for example. Thus, the technologies described above require an enormous amount of labor for the learning of the GAN.

SUMMARY OF THE INVENTION

One object of the present disclosure is to reduce labor for learning of a GAN.

According to the present disclosure, there is provided a learning system including: a discrimination image acquisition module configured to acquire, for each feature of a generative adversarial network (GAN) which allows a user to control a plurality of features relating to a generated image, an anchor discrimination image, a positive discrimination image changed in the each feature from the anchor discrimination image, and a negative discrimination image changed in another feature from the anchor discrimination image; a discrimination vector calculation module configured to calculate, for each feature space corresponding to each of the plurality of features, based on a discriminator of the GAN, an anchor discrimination vector relating to the anchor discrimination image of the each of the plurality of features, a positive discrimination vector relating to the positive discrimination image of the each of the plurality of features, and a negative discrimination vector relating to the negative discrimination image of the each of the plurality of features; and a discriminator learning module configured to execute learning of the discriminator such that, in the feature space corresponding to each of the plurality of features, the anchor discrimination vector and the positive discrimination vector approach each other, and the anchor discrimination vector and the negative discrimination vector become distant from each other.

According to the present disclosure, for example, it is possible to reduce labor for learning of the GAN.

BRIEF DESCRIPTION OF THE DRAWINGS

FIG. 1 is a diagram for illustrating an example of a hardware configuration of a learning system.
FIG. 2 is a diagram for illustrating an example of a GAN which allows a user to control features relating to a generated image.
FIG. 3 is a diagram for illustrating an example of functions implemented in the learning system.

FIG. 4 is a diagram for illustrating an example of functions for learning of a discriminator.
FIG. 5 is a diagram for illustrating an example of the functions for the learning of the discriminator.
FIG. 6 is a table for showing an example of a discrimination image database.
FIG. 7 is a diagram for illustrating an example of functions for learning of a generator.
FIG. 8 is a diagram for illustrating an example of the functions for the learning of the generator.
FIG. 9 is a table for showing an example of a generated image database.
FIG. 10 is a flowchart for illustrating an example of processing executed in the learning system.
FIG. 11 is a flowchart for illustrating the example of the processing executed in the learning system.

DESCRIPTION OF THE EMBODIMENTS

[1. Hardware Configuration of Learning System]

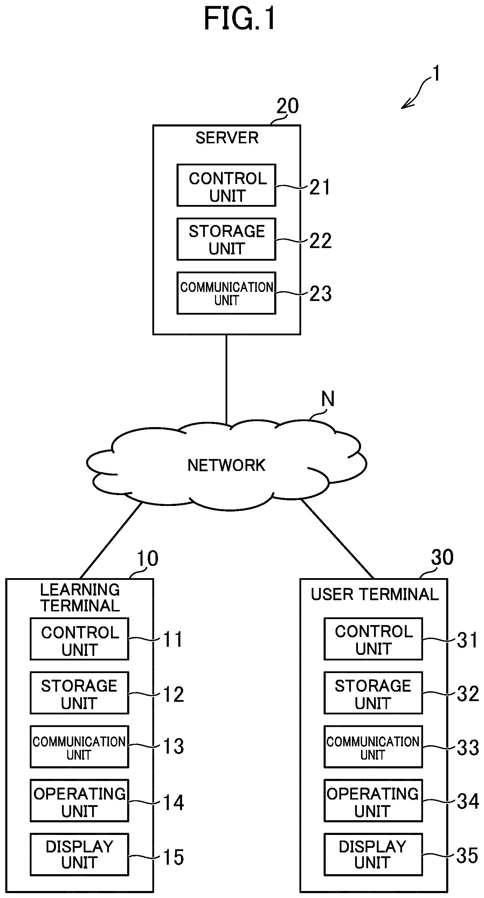

An example of a learning system, a learning method, and a program according to an embodiment of the present disclosure is described. FIG. 1 is a diagram for illustrating an example of a hardware configuration of the learning system. For example, a learning system 1 includes a learning terminal 10, server 20, and a user terminal 30. The learning terminal 10, the server 20, and the user terminal 30 are each connected to a network N, such as the Internet or a local area network (LAN).

The learning terminal 10 is a computer which executes learning of a generative advanced network (GAN) which generates an image. An image generated by the GAN is hereinafter referred to as "generated image." For example, the learning terminal 10 is a personal computer, a server computer, a tablet terminal, or a smartphone. For example, the learning terminal 10 includes a control unit 11, a storage unit 12, a communication unit 13, an operation unit 14, and a display unit 15.

For example, the control unit 11 includes at least one processor. The storage unit 12 includes at least one of a volatile memory such as a RAM, or a non-volatile memory such as a flash memory. The communication unit 13 includes at least one of a communication interface for wired communication or a communication interface for wireless communication. The operation unit 14 is an input device such as a touch panel or a mouse. The display unit 15 is a display such as a liquid crystal display or an organic EL display.

The server 20 is a server computer which stores the trained GAN. For example, the server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively.

The user terminal 30 is a computer of a user who uses the trained GAN. For example, the user terminal 30 is a personal computer, a smartphone, a tablet, or a wearable terminal. For example, the user terminal 30 includes a control unit 31, a storage unit 32, a communication unit 33, an operation unit 34, and a display unit 35. Hardware configurations of the control unit 31, the storage unit 32, the communication unit 33, the operation unit 34, and the display unit 35 may be the same as those of the control unit 11, the storage unit 12, the communication unit 13, the operation unit 14, and the display unit 15, respectively.

Programs stored in the storage units 12, 22, and 32 may be supplied to the learning terminal 10, the server 20, or the user terminal 30 through the network N. Moreover, the learning terminal 10, the server 20, or the user terminal 30 may include at least one of a reading unit (for example, a memory card slot) for reading a computer-readable information storage medium or an input/output unit (for example, a USB port) for inputting/outputting data from/to an external device. For example, a program stored in the information storage medium may be supplied to the learning terminal 10, the server 20, or the user terminal 30 through at least one of the reading unit or the input/output unit.

Further, the learning system 1 is only required to include at least one computer. The computers included in the learning system 1 are not limited to the example of FIG. 1. For example, the learning system 1 may include only the learning terminal 10. In this case, the server 20 and the user terminal 30 exist outside the learning system 1. The learning system 1 may include only the learning terminal 10 and the server 20. In this case, the user terminal 30 exists outside the learning system 1. The learning system 1 may include only other computers not shown in FIG. 1.

[2. Overview of Learning System]

For example, the GAN generates a generated image based on random noise. When the GAN generates the generated image completely based on the random noise, the GAN may not generate a generated image having a feature desired by the user. The feature as used herein is a visual feature of the generated image. For example, a shape of an object (for example, a person, an animal, scenery, or a building) appearing in the generated image, a color of this object, a size of this object, a brightness of this object, and an arrangement place of this object correspond to the features. The feature can also be considered as a style, a condition, or an attribute of the generated image.

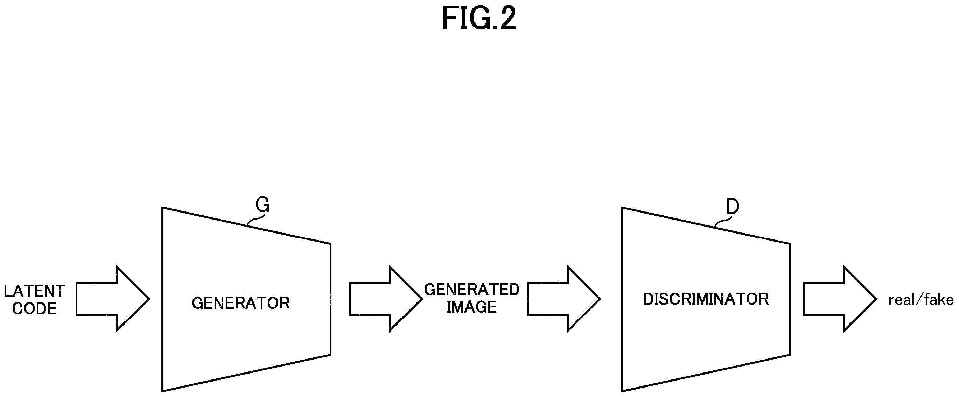

FIG. 2 is a diagram for illustrating an example of the GAN which allows the user to control the features relating to the generated image. For example, as research relating to the GAN which generates the generated image having features desired by the user, research relating to the conditional GAN, the StyleGAN, or the self-supervised style decomposition (SSD)-GAN is under research. A portion simply described as "feature" hereinafter means not a feature vector calculated by the GAN, but the feature to be controlled. In this embodiment, the user can control each of a plurality of features.

As illustrated in FIG. 2, the GAN includes a generator G which generates the generated image and a discriminator D which discriminates the generated image. The generator G is a model which generates the generated image based on a latent code corresponding to features desired by the user. For example, the generator G is a convolutional neural network or a fully connected neural network. As the generator G, a publicly-known another method may be used. In recent years, a method called "Transformer" used mainly for natural language processing is sometimes used for image generation, and hence the generator G may be one which uses this method.

The latent code is information used to transmit the feature desired by the user to the generator G. For example, the latent code is expressed in a vector form. The latent code is also sometimes referred to as "condition vector." The latent code may be expressed in another form other than the vector. For example, in a GAN which generates a generated image indicating a face of the human, it is assumed that the user can control three features which are a degree of smile, an age, and a hairstyle. When the user specifies those three features, a latent code corresponding to each of the degree of simile, the age, and the hairstyle specified by the user is generated. The user is not required to specify all of the features and may specify only some of the features.

For example, the generator G generates the generated image based on the latent code input to the generator G itself. The latent code may include random noise. The generator G may generate a generated image based on the random noise independently of the latent code. Processing of the generator G after the input of the latent code may be publicly-known processing. For example, the generator G may convert the latent code to an expression having higher dimensions. The generator G outputs the generated image corresponding to the latent code based on parameters of the generator G itself. For processing for converting the latent code to the generated image, the parameters of the generator G are referred to. A series of processing steps until the generator G outputs the generated image may be publicly-known processing.

The discriminator D discriminates authenticity of the generated image. In the case of the controllable GAN, the discriminator D discriminates whether or not the generated image has the features desired by the user. That is, the discriminator D discriminates whether or not the generated image is an image corresponding to the latent code. For example, the discriminator D is a convolutional neural network or a fully connected neural network. As the discriminator D, a publicly-known another method may be used. In recent years, the method called "Transformer" mainly used for natural language processing is sometimes used for image generation, and hence the discriminator D may be one which uses this method.

For example, when the generated image is input to the discriminator D itself, the discriminator D executes processing such as convolution based on parameters of the discriminator D itself, to thereby calculate a feature vector relating to the generated image. The discriminator D outputs a discrimination result corresponding to this feature vector. The discrimination result may be a label indicating the authenticity of the generated image, a score indicating a probability of the authenticity of the generated image, a label indicating whether or not the generated image is an image corresponding to the latent code, a score indicating a probability that the generated image is an image corresponding to the latent code, or a combination thereof. The series of processing steps from the input of the generated image to the discriminator D to the output of the discrimination result by the discriminator D may be publicly-known processing.

As described above, the GAN includes the generator G and the discriminator D. As the learning of the GAN, learning of the discriminator D is generally executed first. After the learning of the discriminator D has completed to a certain degree, learning of the generator G is executed. After that, the learning of the discriminator D and the learning of the generator G are repeated. As illustrated in FIG. 2, it is required to cause the GAN allowing the user to control the plurality of features to learn images having various features. For example, in order to create the GAN allowing the user to control the three features including the degree of simile, the age, and the hairstyle, it is required to prepare images of various degrees of smile, images of various ages, and images of various hairstyles.

For example, it takes an enormous amount of labor for a creator who is to create the GAN to manually label the images to be learned by the GAN in order to prepare the images. It is conceivable to use a classification model for classifying the images to be learned by the GAN so that the creator is not required to manually label the images, but preparation of the classification model takes labor. Hitherto, processing of preparing the images to be learned by the GAN and processing of training the GAN through use of those images have independently been executed, and hence this learning is not considered to be efficient also in this respect. Further, when the number of images to be learned by the GAN is small, accuracy of the GAN possibly decreases.

Thus, the learning system 1 according to this embodiment employs a learning method specific to the GAN allowing the user to control the plurality of features, to thereby reduce the labor for the learning of the GAN without requiring the manual labeling of the discrimination images or the use of the pre-trained classification model. Moreover, the learning system 1 executes, in one go, the preparation of the images to be learned by the GAN and the learning of the GAN through use of those images, to thereby achieve efficient learning. The learning system 1 also achieves the increase in accuracy of the GAN through this learning. Details of the learning system 1 are now described.

[3. Functions Implemented in Learning System]

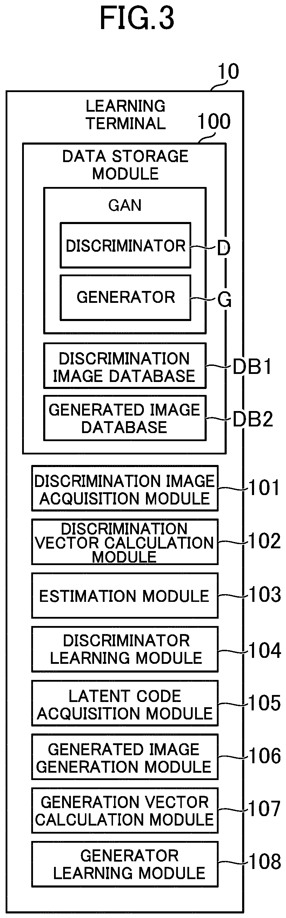

FIG. 3 is a diagram for illustrating an example of functions implemented in the learning system 1. In this embodiment, a case in which main functions for the learning of the GAN are implemented on the learning terminal 10 is exemplified.

In this embodiment, processing at the time of the learning of the GAN which generates a generated image of a face of an animal is exemplified. Further, as the features controllable by the user, four features including a viewpoint, global identity, local identity, and a color are exemplified. The viewpoint is at least one of a position or a direction of the viewpoint. The viewpoint can also be considered as a camera. The global identity is an overall appearance of an object. The local identity is a local appearance of the object. The color is an overall color of the object.

[3-1. Functions for Learning of Discriminator]

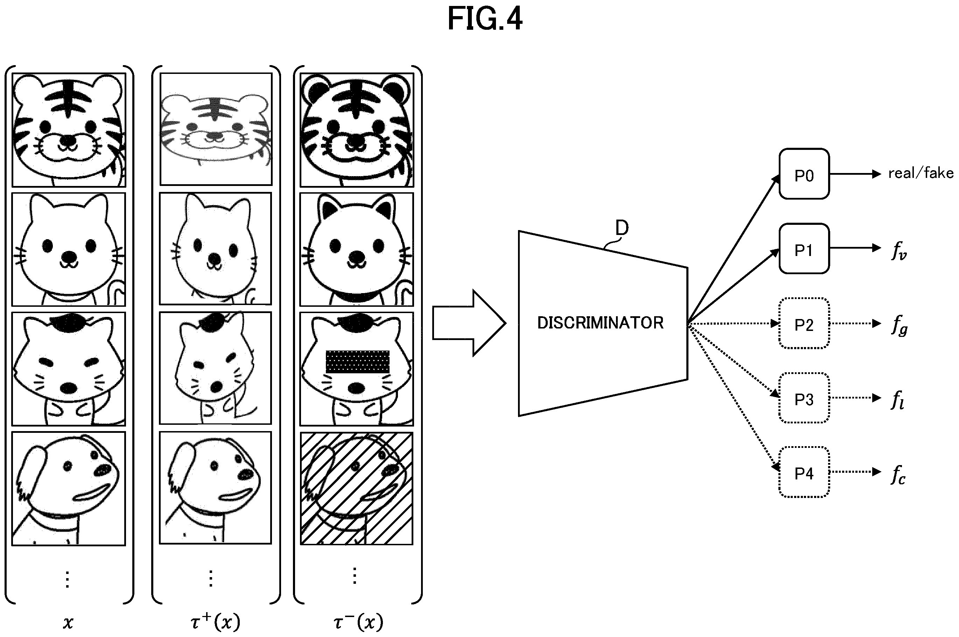

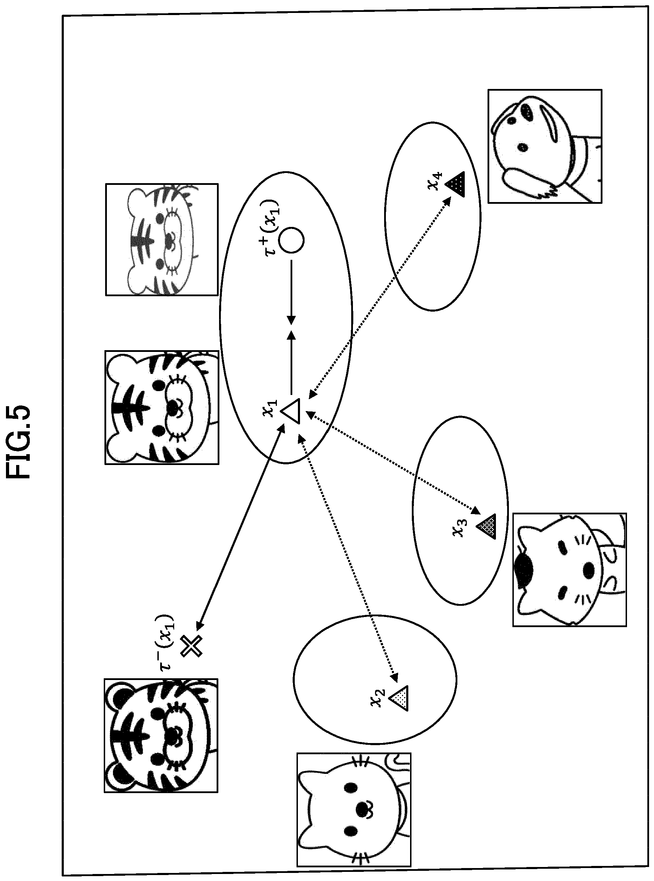

FIG. 4 and FIG. 5 are diagrams for illustrating an example of the functions for the learning of the discriminator D. While using the diagram for illustrating the functions of the learning terminal 10 illustrated in FIG. 3, and referring to FIG. 4 and FIG. 5, the functions for the learning of the discriminator D are described. As illustrated in FIG. 3, for example, the learning terminal 10 includes, as the functions for the learning of the discriminator D, a data storage module 100, a discrimination image acquisition module 101, a discrimination vector calculation module 102, an estimation module 103, and a discriminator learning module 104. The data storage module 100 is implemented by the storage unit 12. Each of the discrimination image acquisition module 101, the discrimination vector calculation module 102, the estimation module 103, and the discriminator learning module 104 is implemented by the control unit 11.

[Data Storage Module]

The data storage module 100 stores data required for the learning of the discriminator D. For example, the data storage module 100 stores actual data on the GAN and a discrimination image database DB1.

The GAN having the actual data stored in the data storage module 100 is a GAN before being trained. The GAN before being trained is a GAN having parameters being initial values. The actual data indicates a program of the GAN and the parameters of the GAN. For example, the data storage module 100 stores actual data on the discriminator D included in the actual data on the GAN. The actual data on the discriminator D indicates a program of the discriminator D and parameters of the discriminator D. The parameters of the discriminator D are referred to by the program of the discriminator D. The parameters of the discriminator D are adjusted by the discriminator learning module 104. For example, the parameters of the discriminator D are weighting coefficients and biases. The parameters of the discriminator D may be publicly-known parameters. For example, the parameters of the discriminator D may be the number of hidden layers, the number of units of the hidden layers, or other hyperparameters.

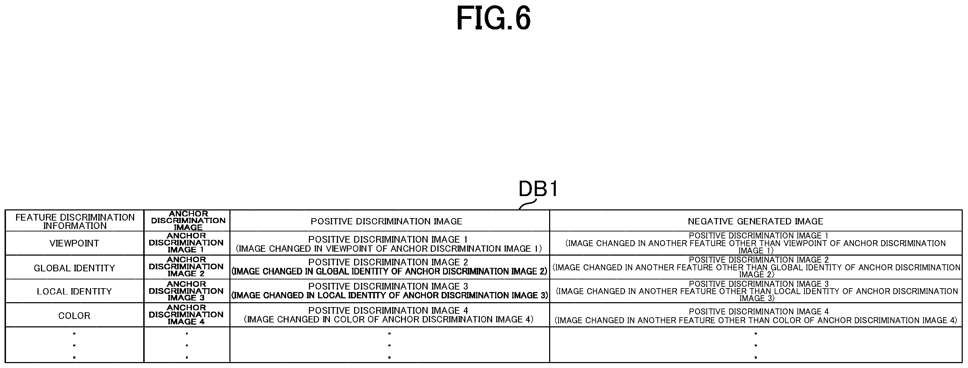

FIG. 6 is a table for showing an example of the discrimination image database DB1. The discrimination image database DB1 is a database which stores discrimination images being images for the learning of the discriminator D. In this embodiment, three discrimination images which are an anchor discrimination image, a positive discrimination image, and a negative discrimination image are used for the learning of the discriminator D. When the anchor discrimination image, the positive discrimination image, and the negative discrimination image are not distinguished from one another, each thereof is simply referred to as "discrimination image." The discrimination image can also be considered as a training image used as training data for the discriminator D.

For example, in the discrimination image database DB1, feature discrimination information and image data on each of the anchor discrimination images, the positive discrimination images, and the negative discrimination images are stored. In the discrimination image database DB1, any data may be stored. The data stored in the discrimination image database DB1 is not limited to the example of FIG. 6. For example, in the discrimination image database DB1, information indicating the feature that has been changed to generate the negative discrimination image out of the plurality of features controllable by the user may be stored.

The feature discrimination information is information that allows discrimination of one of the plurality of features controllable by the user. In this embodiment, the feature discrimination information indicates any one of the viewpoint, the global identity, the local identity, or the color. For each piece of feature discrimination information indicating one certain feature, a set of three discrimination images being the anchor discrimination image, the positive discrimination image, and the negative discrimination image is stored in the discrimination image database DB1. This set is hereinafter referred to as "discrimination image set." For the piece of feature discrimination information indicating one certain feature, a plurality of discrimination image sets may be stored in the discrimination image database DB1.

The number of features controllable by the user is not limited to four as in this embodiment. The number of features is only required to be two or more. For example, the number of features may be two or three, or may be five or more. Specific content indicated by the feature is not limited to the example in this embodiment. The feature may be a feature used for publicly-known image generation. For example, the feature may be a facial expression, a contour of the face, a color of the eyes, a color of the hair, brightness, a background, or another feature. In this embodiment, the case in which the user can control the plurality of features is exemplified, but a GAN allowing the control of only one feature may be trained in the same manner as in this embodiment.

The anchor discrimination image is an original image in which the features controllable by the user are not changed. For example, the anchor discrimination image may be a publicly-known image distributed with or without charge on the Internet. The anchor discrimination image is an image serving as a reference in metric learning. In this embodiment, the anchor discrimination image is defined by "x" of Equation 1. The symbol B is a batch size. The symbol "i" is a numerical value for discriminating each anchor discrimination image. The symbol "i" is any value equal to or larger than 1 and equal to or smaller than B. The symbol $x_i$ is each anchor discrimination image. The symbol "x" is a set of the anchor discrimination images. For example, images of FIG. 4 corresponding to "x" are anchor discrimination images. An original dataset of the anchor discrimination images can be described as xeX.

[Equation 1]

$$x = \{x_i\}_{i=1}^{B}$$

The positive discrimination image is an image changed in at least one of the plurality of features controllable by the user from the anchor discrimination image. In this embodiment, there is exemplified the case in which the positive discrimination image is an image changed in any one of the plurality of features controllable by the user from the anchor discrimination image, but the positive discrimination image may be an image changed in each of the plurality of features controllable by the user from the anchor discrimination image. The positive discrimination image is an image which is to be recognized by the discriminator D as an image similar to the anchor discrimination information (image belonging to the same cluster as that of the anchor discrimination image) in the metric learning. When it is required to express each positive discrimination image as a mathematical expression, the positive discrimination image is described as $\tau^+(x_i)$. The symbol $\tau^+$ means a positive change. For example, images of FIG. 4 corresponding to $\tau^+(x)$ are positive discrimination images.

In this embodiment, a positive discrimination image of certain feature discrimination information is an image changed in the feature indicated by this feature discrimination information from the anchor image of this feature discrimination information. For example, a positive discrimination image of the feature discrimination information indicating the viewpoint is an image changed in viewpoint from the anchor discrimination image. A positive discrimination image of the feature discrimination information indicating the global identity is an image changed in global identity from the anchor discrimination image. A positive discrimination image of the feature discrimination information indicating the local identity is an image changed in local identity from the anchor discrimination image. A positive discrimination image of the feature discrimination information indicating the color is an image changed in color from the anchor discrimination image.

The negative discrimination image is an image changed in a feature different from that of the positive discrimination image from the anchor discrimination image. In this embodiment, there is exemplified the case in which the negative discrimination image is an image changed, from the anchor discrimination image, in another one feature that is different from that of the positive discrimination image out of the plurality of features controllable by the user, but the negative discrimination image may be an image changed, from the anchor discrimination image, in each of the plurality of other features. The negative discrimination image is an image to be recognized by the discriminator D as an image different from the anchor discrimination information (image not belonging to the same cluster as that of the anchor discrimination image) in the metric learning. When it is required to express each negative discrimination image as a mathematical expression, the negative discrimination image is described as $\tau^-(x_i)$. The symbol $\tau^-$ means a negative change. The symbol $\tau^-$ is different from $\tau^+$. For example, images of FIG. 4 corresponding to $\tau^-(x)$ are negative discrimination images.

In this embodiment, a negative discrimination image of certain feature discrimination information is an image changed in a feature other than the feature indicated by this feature discrimination information from the anchor image of this feature discrimination information. For example, the negative discrimination image of the feature discrimination information indicating the viewpoint is an image changed in another feature other than the viewpoint (any one of the global identity, the local identity, and the color) from the anchor discrimination image. The negative discrimination image of the feature discrimination information indicating the global identity is an image changed in another feature other than the global identity (any one of the viewpoint, the local identity, and the color) from the anchor discrimination image.

For example, the negative discrimination image of the feature discrimination information indicating the local identity is an image changed in another feature other than the local identity (any one of the viewpoint, the global identity, and the color) from the anchor discrimination image. The negative discrimination image of the feature discrimination information indicating the color is an image changed in another feature other than the color (any one of the viewpoint, the global identity, and the local identity) from the anchor discrimination image.

The data stored in the data storage module 100 is not limited to the above-mentioned example. The data storage module 100 may store any data. For example, the data storage module 100 may store a discriminator learning program indicating a series of processing steps in the learning of the discriminator D. In the discriminator learning program, a program code which indicates each of the processing of the discrimination image acquisition module 101, the processing of the discrimination vector calculation module 102, part of the processing of the estimation module 103, and the processing of the discriminator learning module 104 is indicated. For example, the data storage module 100 may store a feature change program for changing each of the plurality of features controllable in the GAN.

[Discrimination Image Acquisition Module]

The discrimination image acquisition module 101 acquires, for each feature of the GAN which allows the user to control the plurality of features relating to the generated image, the anchor discrimination image, the positive discrimination image changed in this feature from the anchor discrimination image, and the negative discrimination image changed in another feature from the anchor discrimination image. For example, the discrimination image acquisition module 101 acquires the discrimination image set for each of the plurality of features controllable by the user. The discrimination image acquisition module 101 may acquire a plurality of discrimination image sets for one feature.

In this embodiment, the pair of the feature discrimination information and the anchor discrimination image is stored in advance in the discrimination image database DB1. For example, in the discrimination image database DB1, a plurality of such pairs may be stored. The positive discrimination image and the negative discrimination image are not initially stored in the discrimination image database DB1. The discrimination image acquisition module 101 refers to the discrimination image database DB1 to acquire the anchor discrimination image of the feature indicated by each of the plurality of pairs. The discrimination image acquisition module 101 generates each of the positive discrimination image and the negative discrimination image of this feature, to thereby acquire each of the positive discrimination image and the negative discrimination image of this feature. The discrimination image acquisition module 101 stores, in the discrimination image database DB1, each of the positive discrimination image and the negative discrimination image of this feature in association with this pair.

In this embodiment, it is assumed that a program for the discrimination image acquisition module 101 to change each of the plurality of features of the anchor discrimination image is stored in the data storage module 100. This program is hereinafter referred to as "feature change program." The feature change program for a certain feature indicates processing of changing this feature of the anchor discrimination image. The feature change program may be a program for publicly-known image processing. The discrimination image acquisition module 101 executes, based on the feature change program for each of the plurality of features, image processing for changing this feature of the anchor discrimination image, to thereby generate each of the positive discrimination image and the negative discrimination image.

In this embodiment, the feature change program for each of the four features being the viewpoint, the global identity, the local identity, and the color is stored in the data storage module 100. The discrimination image acquisition module 101 generates the positive discrimination image and the negative discrimination image for each feature based on each of those four feature change programs.

For example, the feature change program for the viewpoint represents processing of making a geometric change. The geometric processing is deformation, rotation, size change, or a combination thereof. The geometric processing may be any processing used in the field of image processing. For example, the geometric processing may be affine transformation, projective transformation, warp processing, rotation, size change, or a combination thereof. The discrimination image acquisition module 101 changes the viewpoint of the anchor discrimination image based on the feature change program for the viewpoint. A degree of the change in viewpoint may randomly be determined, or may be defined in advance.

For example, the feature change program for the global identity indicates processing of changing the overall appearance of an object indicated by the anchor discrimination image. The processing of changing the overall appearance indicates processing of changing a contour, a size, a color, or a combination thereof of the object. The processing of changing the overall appearance may be other processing such as blurring processing and masking processing. The processing of changing the overall appearance may be any processing used in the field of image processing. The discrimination image acquisition module 101 changes the global identity of the anchor discrimination image based on the feature change program for the global identity. A degree of the change in global identity may randomly be determined, or may be defined in advance.

For example, the feature change program for the local identity indicates processing of changing the local appearance of the object indicated by the anchor discrimination image. The processing of changing the local appearance indicates processing of changing a contour, a size, a color, or a combination thereof of a part of the object. The processing of changing the local appearance may be other processing such as blurring processing and masking processing. The processing of changing the local appearance may be any processing used in the field of image processing. The discrimination image acquisition module 101 changes the local identity of the anchor discrimination image based on the feature change program for the local identity. A degree of the change in local identity may randomly be determined, or may be defined in advance.

For example, the feature change program for the color indicates processing of changing the color of an object indicated by the anchor discrimination image. The processing of changing the color indicates processing of making change in color filter, hue change, color balance adjustment, or a combination thereof. The processing of changing the color may be processing of changing brightness, a transparency level, or the like. The processing of changing the color may be any processing used in the field of image processing. The discrimination image acquisition module 101 changes the color of the anchor discrimination image based on the feature change program of the color. A degree of the change in color may randomly be determined, or may be defined in advance.

The change in features is hereinafter defined by Equation 2. The symbol $\tau_v$ is the change in viewpoint. The symbol $\tau_g$ is the change in global identity. The symbol $\tau_l$ is the change in local identity. The symbol $\tau_c$ is the change in color. The symbol T is a set of those changes. When it is required to express the changes in features as a mathematical expression, those symbols are hereinafter used. In this embodiment, the discrimination image acquisition module 101 generates the positive discrimination image and the negative discrimination image for each feature based on each of those above-mentioned four feature change programs. In a case of a GAN which allows control of a feature other than the viewpoint, the global identity, the local identity, and the color, it is assumed that the feature change program for this another feature is stored in the data storage module 100. The discrimination image acquisition module 101 is only required to change the anchor discrimination image based on the feature change program for the another feature, to thereby generate at least one of the positive discrimination image or the negative discrimination image.

[Equation 2]

$$ T = \left\{ \tau_v, \tau_g, \tau_l, \tau_c \right\} $$

For example, when certain feature discrimination information indicates the viewpoint, the discrimination image acquisition module 101 changes the viewpoint of the anchor discrimination image of this feature discrimination information based on the feature change program for the viewpoint, to thereby generate the positive discrimination image. The discrimination image acquisition module 101 changes, based on the feature change program for another feature (global identity, local identity, or color) other than the viewpoint, the another feature of the anchor discrimination image of this feature discrimination information indicating the viewpoint, to thereby generate the negative discrimination image. The discrimination image acquisition module 101 stores, in the discrimination image database DB1, the generated positive discrimination image and negative discrimination image in association with the feature discrimination information and the anchor discrimination image.

For example, when certain feature discrimination information indicates the global identity, the discrimination image acquisition module 101 changes the global identity of the anchor discrimination image of this feature discrimination information based on the feature change program for the global identity, to thereby generate the positive discrimination image. The discrimination image acquisition module 101 changes, based on the feature change program for another feature (viewpoint, local identity, or color) other than the global identity, the another feature of the anchor discrimination image of this feature discrimination information indicating the global identity, to thereby generate the negative discrimination image. The discrimination image acquisition module 101 stores, in the discrimination image database DB1, the generated positive discrimination image and negative discrimination image in association with the feature discrimination information and the anchor discrimination image.

For example, when certain feature discrimination information indicates the local identity, the discrimination image acquisition module 101 changes the local identity of the anchor discrimination image of this feature discrimination information based on the feature change program for the local identity, to thereby generate the positive discrimination image. The discrimination image acquisition module 101 changes, based on the feature change program for another feature (viewpoint, global identity, or color) other than the local identity, the another feature of the anchor discrimination image of this feature discrimination information indicating the local identity, to thereby generate the negative discrimination image. The discrimination image acquisition module 101 stores, in the discrimination image database DB1, the generated positive discrimination image and negative discrimination image in association with the feature discrimination information and the anchor discrimination image.

For example, when certain feature discrimination information indicates the color, the discrimination image acquisition module 101 changes the color of the anchor discrimination image of this feature discrimination information based on the feature change program for the color, to thereby generate the positive discrimination image. The discrimination image acquisition module 101 changes, based on the feature change program for another feature (viewpoint, global identity, or local identity) other than the color, the another feature of the anchor discrimination image of this feature discrimination information indicating the color, to thereby generate the negative discrimination image. The discrimination image acquisition module 101 stores, in the discrimination image database DB1, the generated positive discrimination image and negative discrimination image in association with the feature discrimination information and the anchor discrimination image.

When the plurality of features are three or more features as in this embodiment, the discrimination image acquisition module 101 may acquire, for each feature, a plurality of negative discrimination images changed in other features different from one another. For example, the discrimination image acquisition module 101 may generate two negative discrimination images, which are a negative discrimination image changed in global identity and a negative discrimination image changed in local identity from the anchor discrimination image of the feature discrimination information indicating the viewpoint. Further, the discrimination image acquisition module 101 may generate a negative discrimination image changed in color from this anchor discrimination image, to thereby generate three negative discrimination images. For the feature other than the viewpoint, the discrimination image acquisition module 101 may similarly generate a plurality of negative discrimination images.

In this embodiment, a plurality of anchor discrimination images are prepared for each feature. From each anchor discrimination image, at least one positive discrimination image and at least one negative discrimination image are generated, and hence the discrimination image acquisition module 101 acquires, for each feature, a plurality of anchor discrimination images, a plurality of positive discrimination images, and a plurality of negative discrimination images. An acquisition method for each anchor discrimination image, each positive discrimination image, and each negative discrimination image is as described above.

In this embodiment, the case in which the discrimination image acquisition module 101 generates the positive discrimination image and the negative discrimination image is exemplified, but the positive discrimination image and the negative discrimination image may be generated by a computer other than the learning terminal 10. In the discrimination image database DB1, the positive discrimination image and the negative discrimination image generated by the another computer may be stored. In this case, the learning terminal 10 is not required to have the function of generating the positive discrimination image and the negative discrimination image.

[Discrimination Vector Calculation Module]

The discrimination vector calculation module 102 calculates, for each feature space corresponding to each of the plurality of features, based on the discriminator D of the GAN, an anchor discrimination vector relating to the anchor discrimination image of this feature, a positive discrimination vector relating to the positive discrimination image of this feature, and a negative discrimination vector relating to the negative discrimination image of this feature. The calculation of those vectors is sometimes referred to as "mapping to the feature space."

The feature space is a multi-dimensional space. There exist as many feature spaces as, or more feature spaces than, the number of features controllable by the user. The discriminator D calculates the feature vector in each of the plurality of feature spaces for an image input to the discriminator D itself. The parameter of the discriminator D for calculating the feature vector in a certain feature space and the parameter of the discriminator D for calculating the feature vector in another feature space are different from each other. There may exist as many parameters of the discriminator D as, or more parameters of the discriminator D than, the number of the features controllable by the user. In this embodiment, five parameters which are a parameter for discriminating the authenticity of the image, a parameter for a feature space corresponding to the viewpoint, a parameter for a feature space corresponding to the global identity, a parameter for a feature space corresponding to the local identity, and a parameter for a feature space corresponding to the color exist in the discriminator D. Another parameter may exist in the discriminator D.

In this embodiment, a case in which a program for calculating the feature vector in a certain feature space and a program for calculating the feature vector in another feature space are the same is exemplified. Even when those programs are the same, the parameter for calculating the feature vector in a certain feature space and the parameter for calculating the feature vector in another feature space are different from each other, and hence different feature vectors are to be calculated for the same image. Those programs may be different from each other. There may exist as many programs of the discriminator D as, or more programs of the discriminator D than, the number of the features controllable by the user.

The anchor discrimination vector is a feature vector of the anchor discrimination image. The positive discrimination vector is a feature vector of the positive discrimination image. The negative discrimination vector is a feature vector of the negative discrimination image. For one certain discrimination image set, a set of three feature vectors being the anchor discrimination vector, the positive discrimination vector, and the negative discrimination vector are calculated. When the number of features controllable by the user is represented by "n" ("n" is an integer equal to or larger than 2), and the number of discrimination image sets is represented by "m" ( "m" is an integer equal to or larger than 2), at least $n \times m \times 3$ feature

vectors are calculated.

In this embodiment, a case in which a feature space for discriminating the authenticity of an image (for example, discrimination image) input to the discriminator D itself and a feature space corresponding to each of the plurality of features controllable by the user exist is exemplified. In this embodiment, the number of features controllable by the user is four, and hence the discriminator D calculates the feature vector in each of the five feature spaces as illustrated in FIG. 4. In the example of FIG. 4, outputs of the discriminator D are denoted by symbols of P0 to P4. It is only required that each of the outputs P0 to P4 be information required for calculation of the feature vector in the feature space. Each of the outputs P0 to P4 may be the feature vector itself in the feature space, or may be information to be input to a calculation expression called projection head for reducing the number of dimensions.

The feature space for the discrimination of the authenticity may be the same as the feature space employed in a publicly-known GAN. For example, when an image (for example, discrimination image) is input to the discriminator D, the discrimination vector calculation module 102 calculates, based on the parameter corresponding to the feature space for the discrimination of the authenticity, the feature vector of the image in this feature space. In the example of FIG. 4, the discrimination vector calculation module 102 uses the projection head to reduce the dimensions of the output P0 from the discriminator D, to thereby calculate the feature vector in the feature space for discriminating the authenticity. Based on this feature vector, the authenticity of the image input to the discriminator D is discriminated.

When it is required to express the feature space of the viewpoint, the feature space of the global identity, the feature space of the local identity, and the feature space of the color as mathematical expressions, those feature spaces are described as $f_v$, $f_g$, $f_l$, and $f_c$, respectively. In the example of FIG. 4, a case in which the discrimination image sets of the viewpoint are input to the discriminator D is illustrated. Thus, the output P1 enclosed by the solid line is used for the calculation of the feature vector in the feature space $f_v$ of the viewpoint. Each of the outputs P2 to P4 is not used for the feature vector in the feature space $f_v$, and is thus enclosed by the dotted line in the example of FIG. 4.

In this embodiment, the discrimination vector calculation module 102 calculates, based on the anchor discrimination image of a certain feature and the parameter of this feature, the anchor discrimination vector in the feature space corresponding to this feature. The discrimination vector calculation module 102 calculates, based on the positive discrimination image of a certain feature and the parameter of this feature, the positive discrimination vector in the feature space corresponding to this feature. The discrimination vector calculation module 102 calculates, based on the negative discrimination image of a certain feature and the parameter of this feature, the negative discrimination vector in the feature space corresponding to this feature.

A change selected as the feature of the positive discrimination image from T indicated by Equation 2 is hereinafter referred to as as "$\tau^+$." A change selected as the feature of the negative discrimination image from T indicated by Equation 2 is hereinafter referred to as "$\tau^-$." The changes $\tau^+$ and $\tau^-$ are different from each other. It is assumed that the random noise is generated in accordance with the normal distribution $z \sim N(0, 1)$. It is assumed that the anchor discrimination image, the positive discrimination image, and the negative discrimination image in the feature space are defined by Equation 3, Equation 4, and Equation 5, respectively. The symbol $D_{\tau+}$ of each of Equation 3, Equation 4, and Equation 5 is the mapping (calculation of the feature vector) in the feature space corresponding to the selected change $\tau^+$.

[Equation 3]

$$\zeta_i = D_{\tau+}(x_i)$$

[Equation 4]

$$\zeta_i^+ = D_{\tau+}\left(\tau^+(x_i)\right)$$

[Equation 5]

$$\zeta_i^- = D_{\tau+}\left(\tau^-(x_i)\right)$$

For example, the discrimination vector calculation module 102 calculates, based on the anchor discrimination image of the viewpoint and the parameter of the viewpoint, the anchor discrimination vector in the feature space corresponding to the viewpoint. The discrimination vector calculation module 102 calculates, based on the positive discrimination image of the viewpoint and the parameter of the viewpoint, the positive discrimination vector in the feature space corresponding to the viewpoint. The discrimination vector calculation module 102 calculates, based on the negative discrimination image of the viewpoint and the parameter of the viewpoint, the negative discrimination vector in the feature space corresponding to the viewpoint.

For example, the discrimination vector calculation module 102 calculates, based on the anchor discrimination image of the global identity and the parameter of the global identity, the anchor discrimination vector in the feature space corresponding to the global identity. The discrimination vector calculation module 102 calculates, based on the positive discrimination image of the global identity and the parameter of the global identity, the positive discrimination vector in the feature space corresponding to the global identity. The discrimination vector calculation module 102 calculates, based on the negative discrimination image of the global identity and the parameter of the global identity, the negative discrimination vector in the feature space corresponding to the global identity.

For example, the discrimination vector calculation module 102 calculates, based on the anchor discrimination image of the local identity and the parameter of the local identity, the anchor discrimination vector in the feature space corresponding to the local identity. The discrimination vector calculation module 102 calculates, based on the positive discrimination image of the local identity and the parameter of the local identity, the positive discrimination vector in the feature space corresponding to the local identity. The discrimination vector calculation module 102 calculates, based on the negative discrimination image of the local identity and the parameter of the local identity, the negative discrimination vector in the feature space corresponding to the local identity.

For example, the discrimination vector calculation module 102 calculates, based on the anchor discrimination image of the color and the parameter of the color, the anchor discrimination vector in the feature space corresponding to the color. The discrimination vector calculation module 102 calculates, based on the positive discrimination image of the color and the parameter of the color, the positive discrimination vector in the feature space corresponding to the color. The discrimination vector calculation module 102 calculates, based on the negative discrimination image of the color and the parameter of the color, the negative discrimination vector in the feature space corresponding to the color.

When, for each feature, a plurality of negative discrimination images changed in other features different from one another are acquired, the discrimination vector calculation module 102 may calculate, for each feature space corresponding to each of the plurality of features, the negative discrimination vector of each of the plurality of negative discrimination images of this feature. That is, when a plurality of negative discrimination images exist for one certain anchor discrimination image, the discrimination vector calculation module 102 may calculate the negative discrimination vector of each of the plurality of negative discrimination images. The calculation method for each negative discrimination vector is as described above.

In this embodiment, the plurality of anchor discrimination images are prepared for each feature, and hence the discrimination vector calculation module 102 calculates, for each feature space corresponding to each of the plurality of features, the anchor discrimination vector of each of the plurality of anchor discrimination images of this feature, the positive discrimination vector of each of the plurality of positive discrimination images of this feature, and the negative discrimination vector of each of the plurality of negative discrimination images of this feature. A calculation method for each anchor discrimination vector, each positive discrimination vector, and each negative discrimination vector is as described above.

[Estimation Module]

The estimation module 103 causes the discriminator D to estimate the authenticity of the anchor discrimination image and the authenticity of the generated image generated by the generator G of the GAN. The estimation as used herein can also be considered as discrimination. The estimation by the estimation module 103 is executed based on the discriminator D being trained. That is, the estimation module 103 executes the estimation based on the current parameters of the discriminator D. For example, the estimation module 103 inputs the anchor discrimination image to the discriminator D. The discriminator D calculates the feature vector of the anchor discrimination image in the feature space for the discrimination of the authenticity. The discriminator D outputs an estimation result of the authenticity based on this feature vector. The estimation module 103 acquires the estimation result of the authenticity output from the discriminator D.

In this embodiment, the plurality of anchor discrimination images are prepared, and hence the estimation module 103 causes the discriminator D to estimate the authenticity of each of the plurality of anchor discrimination images. The estimation module 103 successively inputs each of the plurality of anchor discrimination images to the discriminator D, and acquires the estimation result of the authenticity of each anchor discrimination image from the discriminator D. The estimation method for the authenticity of each anchor discrimination image is as described above.

For example, the estimation module 103 acquires the generated image generated by the generator G. This generator G is a generator G being trained. This generator G may be an initial generator G, or a generator G which has temporarily finished being trained by the generator learning module 108 described later. The estimation module 103 inputs the generated image to the discriminator D. The discriminator D calculates the feature vector of the generated image in the feature space for the discrimination of the authenticity. The discriminator D outputs the estimation result of the authenticity based on this feature vector. The estimation module 103 acquires the estimation result of the authenticity output from the discriminator D.

[Discriminator Learning Module]

The discriminator learning module 104 executes the learning of the discriminator D such that, in the feature space corresponding to each of the plurality of features, the anchor discrimination vector and the positive discrimination vector approach each other, and the anchor discrimination vector and the negative discrimination vector become distant from each other. In other words, the discriminator learning module 104 executes the learning of the discriminator D such that, in the feature space corresponding to each of the plurality of features, the anchor discrimination vector and the positive discrimination vector belong to the same cluster, and the anchor discrimination vector and the negative discrimination vector do not belong to the same cluster.

An algorithm itself for the learning may be a publicly-known algorithm used for the metric learning. For example, for the learning of the discriminator D, an algorithm such as the gradient descent method may be used. In this embodiment, a mutual relationship among three discrimination images is used for the learning, and hence the discriminator learning module 104 executes, based on a loss function of the triplet margin loss, the learning of the discriminator D such that the anchor discrimination vector and the positive discrimination vector approach each other, and the anchor discrimination vector and the negative discrimination vector become distant from each other. The loss function as described in this embodiment is an example of the loss function of the triplet margin loss.

For example, the discriminator learning module 104 adjusts, in the feature space corresponding to each of the plurality of features, the parameter of this feature such that the anchor discrimination vector and the positive discrimination vector approach each other, and the anchor discrimination vector and the negative discrimination vector become distant from each other, to thereby execute the learning of the discriminator D. The discriminator learning module 104 calculates, based on the loss function in the metric learning, in the feature space corresponding to each of the plurality of features, a loss indicating closeness between the anchor discrimination vector and the positive discrimination vector and farness between the anchor discrimination vector and the negative discrimination vector, and adjusts the parameter of this feature such that this loss decreases.

For example, the discriminator learning module 104 adjusts, in the feature space corresponding to the viewpoint, the parameter of the viewpoint such that the anchor discrimination vector of the anchor discrimination image of the viewpoint and the positive discrimination vector of the positive discrimination image of the viewpoint approach each other, and this anchor discrimination vector and the negative discrimination vector of the negative discrimination image of the viewpoint become distant from each other, to thereby execute the learning of the discriminator D. The discriminator learning module 104 calculates, based on the loss function in the metric learning, in the feature space corresponding to the viewpoint, the loss indicating the closeness between the anchor discrimination vector and the positive discrimination vector and the farness between the anchor discrimination vector and the negative discrimination vector, and adjusts the parameter of the viewpoint such that this loss decreases.

In the example of FIG. 5, a state of the feature space corresponding to the viewpoint is illustrated. For example, through the learning, a distance between the anchor discrimination image $x_1$ of the viewpoint and the positive discrimination image $\tau^+(x_1)$ of the viewpoint becomes shorter, resulting in those discrimination images belonging to the same cluster. Through the learning, a distance between the anchor discrimination image $x_1$ of the viewpoint and the negative discrimination image $\tau^-(x_1)$ of the viewpoint becomes longer, resulting in those discrimination images not belonging to the same cluster. In this embodiment, through the learning, a distance between the anchor discrimination image $x_1$ of the viewpoint and each of the other anchor discrimination images $x_2$ to $x_4$ of the viewpoint becomes longer, resulting in those discrimination images not belonging to the same cluster. For the feature space other than the feature space corresponding to the viewpoint, the same learning is executed.

For example, the discriminator learning module 104 adjusts, in the feature space corresponding to the global identity, the parameter of the global identity such that the anchor discrimination vector of the anchor discrimination image of the global identity and the positive discrimination vector of the positive discrimination image of the global identity approach each other, and this anchor discrimination vector and the negative discrimination vector of the negative discrimination image of the global identity become distant from each other, to thereby execute the learning of the discriminator D. The discriminator learning module 104 calculates, based on the loss function in the metric learning, in the feature space corresponding to the global identity, the loss indicating the closeness between the anchor discrimination vector and the positive discrimination vector and the farness between the anchor discrimination vector and the negative discrimination vector, and adjusts the parameter of the global identity such that this loss decreases.

For example, the discriminator learning module 104 adjusts, in the feature space corresponding to the local identity, the parameter of the local identity such that the anchor discrimination vector of the anchor discrimination image of the local identity and the positive discrimination vector of the positive discrimination image of the local identity approach each other, and this anchor discrimination vector and the negative discrimination vector of the negative discrimination image of the local identity become distant from each other, to thereby execute the learning of the discriminator D. The discriminator learning module 104 calculates, based on the loss function in the metric learning, in the feature space corresponding to the local identity, the loss indicating the closeness between the anchor discrimination vector and the positive discrimination vector and the farness between the anchor discrimination vector and the negative discrimination vector, and adjusts the parameter of the local identity such that this loss decreases.

For example, the discriminator learning module 104 adjusts, in the feature space corresponding to the color, the parameter of the color such that the anchor discrimination vector of the anchor discrimination image of the color and the positive discrimination vector of the positive discrimination image of the color approach each other, and this anchor discrimination vector and the negative discrimination vector of the negative discrimination image of the color become distant from each other, to thereby execute the learning of the discriminator D. The discriminator learning module 104 calculates, based on the loss function in the metric learning, in the feature space corresponding to the color, the loss indicating the closeness between the anchor discrimination vector and the positive discrimination vector and the farness between the anchor discrimination vector and the negative discrimination vector, and adjusts the parameter of the color such that this loss decreases.

In this embodiment, the discriminator learning module 104 calculates, for each anchor discrimination image, a contrastive discrimination loss relating to the closeness between the anchor discrimination vector of this anchor discrimination image and the positive discrimination vector of the positive discrimination image of this anchor discrimination image and the closeness between the anchor discrimination vector of this anchor discrimination image and the negative discrimination vector of the negative discrimination image of this anchor discrimination image. The discriminator learning module 104 executes the learning of the discriminator D based on the contrastive discrimination loss. The discriminator learning module 104 executes the learning of the discriminator D such that the contrastive discrimination loss decreases.

The contrastive discrimination loss is a contrastive loss calculated based on the discrimination image. The contrastive loss is a loss used in similarity learning. The contrastive loss is a loss which causes pieces of data in the same class to approach each other and causes pieces of data in different classes to become distant from each other. As a calculation expression itself for the contrastive loss, a publicly-known calculation expression can be used. In this embodiment, the discriminator learning module 104 calculates the contrastive discrimination loss based on Equation 6. Equation 6 is an example of an expression for evaluating each of a difference between the anchor discrimination image and the positive discrimination image, a difference between the anchor discrimination image and the negative discrimination image, and a difference between the anchor discrimination image and another anchor discrimination image.

[Equation 6]

$$\gamma_i = -\log \frac{exp(\zeta_i^T \zeta_i^+ / \epsilon)}{exp(\zeta_i^T \zeta_i^+ / \epsilon) + exp(\zeta_i^T \zeta_i^- / \epsilon) + \alpha \sum_{j \neq i}^{B} exp(\zeta_i^T \zeta_j^- / \epsilon)}$$

The symbol $\epsilon$ of Equation 6 is a temperature parameter indicating influence of the positive discrimination image and the negative discrimination image at the time of the calculation of the contrastive discrimination loss. For example, $\epsilon$ is 0.1. The symbol $\alpha$ is a weight coefficient indicating influence of $\zeta_j^-$ being the anchor discrimination vector of another anchor discrimination image. In this embodiment, $\alpha$ is smaller than $\epsilon$. For example, $\alpha$ is 0.01. The symbols $\epsilon$ and $\alpha$ may be any values, and are not limited to the example in this embodiment.

For example, the discriminator learning module 104 executes the learning of the discriminator D such that, in the feature space corresponding to each of the plurality of features, the anchor discrimination vector of each of the plurality of anchor discrimination images and the positive discrimination vector of the positive discrimination image of this anchor discrimination image approach each other, the anchor discrimination vector of this anchor discrimination image and the negative discrimination vector of the negative discrimination image of this anchor discrimination image become distant from each other, and the anchor discrimination vector of this anchor discrimination image and the anchor discrimination vector of another anchor discrimination image become distant from each other. The portion "the anchor discrimination vector of this anchor discrimination image and the anchor discrimination vector of another anchor discrimination image become distant from each other" is defined in a portion subsequent to $\alpha$ in the example of Equation 6.

The calculation expression of the contrastive loss is not limited to Equation 6. For example, such learning that a certain anchor discrimination image and another anchor discrimination image become distant from each other is not required to be executed. In this case, a mathematical expression without a portion including the coefficient $\alpha$ of Equation 6 may be used. Moreover, for example, a mathematical expression without the temperature parameter $\epsilon$ may be used. The calculation expression of the contrastive loss may be another calculation expression used for the method for the triplet margin loss.

For example, the discriminator learning module 104 calculates a batchwise discrimination loss relating to an average of the contrastive discrimination losses each calculated for one of the plurality of anchor discrimination images. The batchwise discrimination loss is a loss reflecting a batch size. For example, the discriminator learning module 104 calculates the batchwise discrimination loss based on Equation 7. The discriminator learning module 104 executes the learning of the discriminator D based on the batchwise discrimination loss. The discriminator learning module 104 executes the learning of the discriminator D such that the batchwise discrimination loss decreases.

[Equation 7]

$$L_{cl}^D = \frac{1}{B} \sum_{i=1}^B \gamma_i$$

The calculation expression of the batchwise discrimination loss is not limited to Equation 7. For example, a weighting coefficient may be defined for each batch. The batchwise discrimination loss may be a sum instead of an average as given by Equation 7. The discriminator learning module 104 may, instead of calculating the batchwise discrimination loss, execute the learning of the discriminator D based on the contrastive loss.

In this embodiment, the discriminator learning module 104 executes the learning of the discriminator D based further on the estimation result of the authenticity of the anchor discrimination image and the estimation result of the authenticity of the generated image generated by the generator G. The discriminator learning module 104 executes the learning of the discriminator D such that a probability that the anchor discrimination image is estimated to be true increases and a probability that the generated image generated by the generator G is estimated to be false increases. For example, the discriminator learning module 104 calculates an adversarial discrimination loss based on Equation 8. The adversarial discrimination loss is an adversarial loss used for the learning of the discriminator D. The discriminator learning module 104 executes the learning of the discriminator D based on the adversarial discrimination loss. The discriminator learning module 104 executes the learning of the discriminator D such that the adversarial discrimination loss decreases.

[Equation 8]

$$L_{adv}^D = -\frac{1}{B} \sum_{i=1}^B \left[ \log D(x_i) + \log\left(1 - D\big(G(z_i)\big)\right) \right]$$

The calculation expression of the adversarial discrimination loss is not limited to Equation 8. The adversarial discrimination loss is only required to be a loss for such learning that the generator G and the discriminator D are adversarial to each other. For example, in Equation 8, an average of the batch sizes is obtained, but instead of obtaining the average, a sum may be used as the adversarial discrimination loss. The calculation expression of the adversarial discrimination loss may be another publicly-known calculation expression employed in the GAN. The adversarial discrimination loss is not required to be used for the learning of the generator G.

In this embodiment, the discriminator learning module 104 executes normalization relating to the estimation result of the authenticity of each of the plurality of anchor discrimination images, and executes the learning of the discriminator D based further on an execution result of the normalization. In this embodiment, a case in which the R1 normalization is executed is exemplified, but, as the normalization itself, publicly-known various methods can be used. Other normalization, for example, the R2 normalization or elastic net regularization may be executed.

For example, the discriminator learning module 104 calculates a normalization discrimination loss based on Equation 9. The discriminator learning module 104 executes the learning of the discriminator D based on the normalization discrimination loss. The discriminator learning module 104 executes the learning of the discriminator D such that the normalization discrimination loss decreases.

[Equation 9]

$$L^D_{R_1} = \frac{1}{B} \sum_{i=1}^{B} (\|\nabla D(x_i)\|_2)^2$$

In this embodiment, the discriminator learning module 104 calculates a final loss based on Equation 10. The discriminator learning module 104 executes the learning of the discriminator D based on the final loss. The discriminator learning module 104 executes the learning of the discriminator D such that the final loss decreases. The symbols $\lambda_{cl}$ and $\lambda_{R1}$ of Equation 10 are hyperparameters. For example, $\lambda_{cl}$ is 1.5, and $\lambda_{R1}$ is 5.0. As described above, a coefficient of the batchwise discrimination loss may be larger than a coefficient of the adversarial discrimination loss. Further, a coefficient of the normalization discrimination loss may be larger than a coefficient of the batchwise discrimination loss.

[Equation 10]

$$L^D = L^D_{adv} + \lambda_{cl} L^D_{cl} + \lambda_{R1} L^D_{R_1}$$

When a plurality of negative discrimination images changed in other features different from one another are prepared for each feature, the discriminator learning module 104 may execute the learning of the discriminator D such that, in the feature space corresponding to each of the plurality of features, the anchor discrimination vector and the negative discrimination vector of each of the plurality of negative discrimination images become distant from each other.

[3-2. Functions for Learning of Generator]

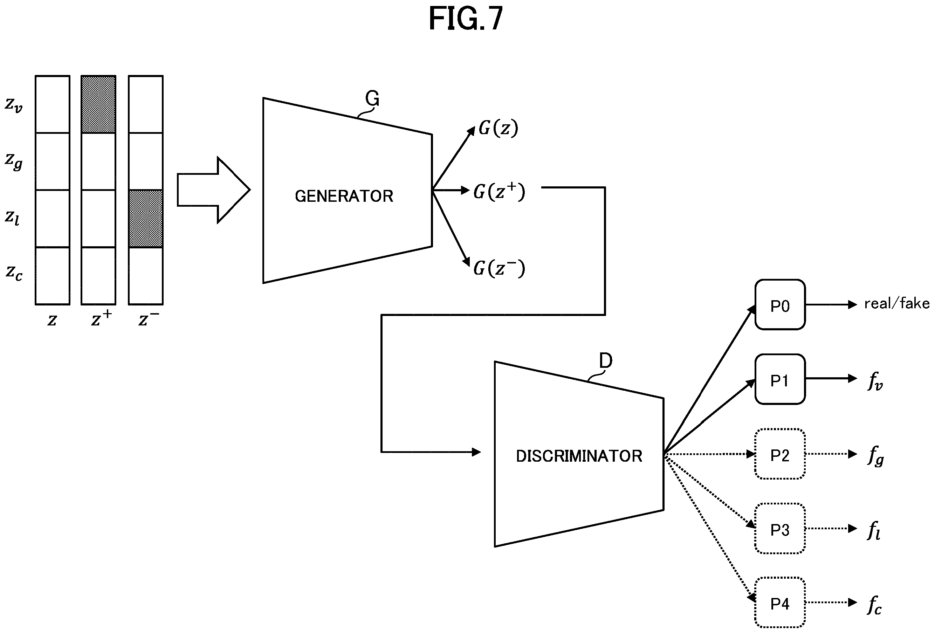

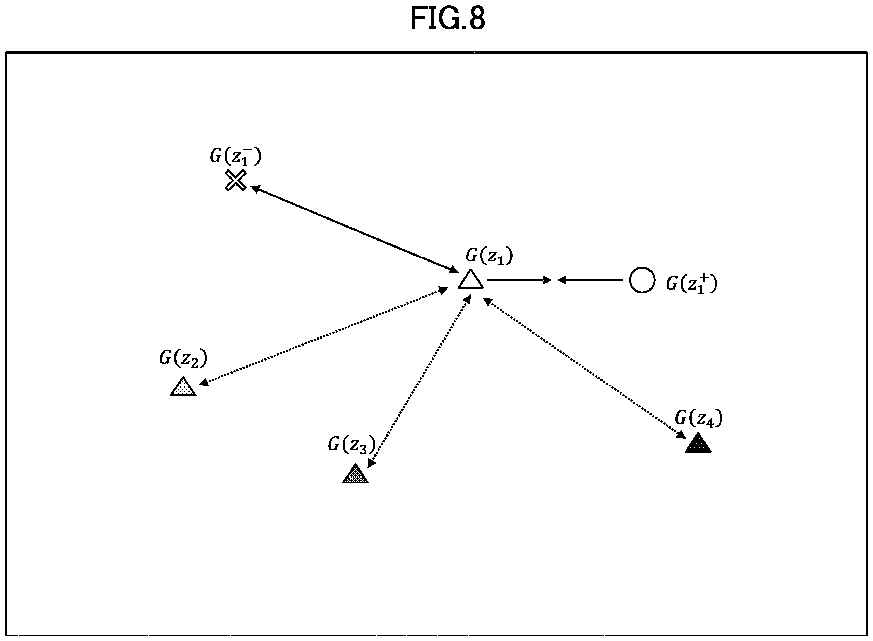

FIG. 7 and FIG. 8 are diagrams for illustrating an example of the functions for the learning of the generator G. While using the diagram of FIG. 3 for illustrating the functions of the learning terminal 10, with reference to FIG. 7 and FIG. 8, the functions for the learning of the generator G are described. As illustrated in FIG. 3, for example, the learning terminal 10 includes, as the functions for the learning of the generator G, the data storage module 100, a latent code acquisition module 105, a generated image generation module 106, a generation vector calculation module 107, and a generator learning module 108. The data storage module 100 is implemented by the storage unit 12. Each of the latent code acquisition module 105, the generated image generation module 106, the generation vector calculation module 107, and the generator learning module 108 is implemented by the control unit 11.

[Data Storage Module]

The data storage module 100 stores data required for the learning of the generator G. For example, the data storage module 100 stores actual data on the generator G included in the actual data on the GAN and a generated image database DB2. The actual data on the generator G indicates a program of the generator G and the parameters of the generator G. The parameters of the generator G are referred to by the program of the generator G. The parameters of the generator G are adjusted by the generator learning module 108. For example, the parameters of the generator G are weighting coefficients and biases. The parameters of the generator G may be publicly-known parameters. For example, the parameters of the generator G may be the number of hidden layers, the number of units of the hidden layers, or other hyperparameters.

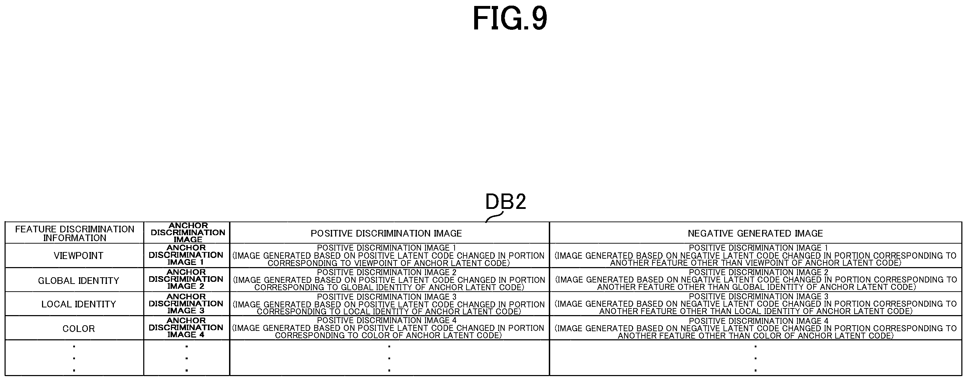

FIG. 9 is a table for showing an example of the generated image database DB2. The generated image database DB2 is a database which stores generated images being images for the learning of the generator G. In this embodiment, three generated images which are an anchor generated image, a positive generated image, and a negative generated image are used for the learning of the generator G. When the anchor generated image, the positive generated image, and the negative generated image are not distinguished from one another, each thereof is hereinafter simply referred to as "generated image." The generated image can be considered as a training image used as training data for the generator G.
For example, in the generated image database DB2, the feature discrimination information and image data on each of the anchor generated image, the positive generated image, and the negative generated image are stored. In the generated image database DB2, any data may be stored. The data stored in the generated image database DB2 is not limited to the example of FIG. 9. For example, in the generated image database DB2, information on a feature a portion of the latent code corresponding to which is changed to generate the negative generated image may be stored.

The anchor generated image is a generated image generated based on the latent code indicating the feature controllable by the user. When it is required to denote each anchor generated image as a mathematical expression, the anchor generated image is described as G(z). The symbol "z" is the latent code input to the generator G. As illustrated in FIG. 7, in this embodiment, the anchor latent code is divided into portions corresponding to individual features. In the example of FIG. 7, a portion corresponding to the viewpoint is $z_v$. A portion corresponding to the global identity is $z_g$. A portion corresponding to the local identity is $z_l$. A portion corresponding to the color is $z_c$. In this embodiment, a case in which the numbers of dimensions of the portions are the same is exemplified, but the numbers of dimensions of the portions may be different from one another. When it is required to convert the latent code to an intermediate latent code through a mapping network, those portions can be described as $w_v$, $w_g$, $w_l$, and $w_c$. The latent code for generating the anchor generated image is hereinafter referred to as "anchor latent code."

The positive generated image is an image generated based on a latent code changed in a portion which is out of the anchor latent code of the anchor generated image and corresponds to at least one of the plurality of features controllable by the user. This latent code is hereinafter referred to as "positive latent code." In this embodiment, a case in which the positive generated image is an image generated based on the positive latent code changed in a portion which is out of the anchor latent code and corresponds to any one of the plurality of features controllable by the user is exemplified, but the positive generated image may be an image generated based on the positive latent code changed in a portion which is out of the anchor latent code and corresponds to each of the plurality of features. When it is required to express each positive latent code as a mathematical expression, the positive latent code is described as $z^+$. When it is required to express each positive generated image as a mathematical expression, the positive generated image is described as $G(z^+)$.

The negative generated image is an image generated based on the latent code changed in a portion which is out of the anchor latent code and is different from that of the positive generated image. This latent code is hereinafter referred to as "negative latent code." In this embodiment, a case in which the negative generated image is an image generated based on the negative latent code changed in one portion which is out of the anchor latent code and is different from that of the positive generated image is exemplified, but the negative generated image may be an image generated based on the negative latent code changed in each of a plurality of other portions of the anchor latent code. When it is required to express each negative latent code as a mathematical expression, the negative latent code is described as z-. When it is required to express each negative generated image as a mathematical expression, the negative generated image is described as $G(z^-)$.

The data stored in the data storage module 100 is not limited to the above-mentioned example. The data storage module 100 may store any data. For example, the data storage module 100 may store a generator learning program indicating a series of processing steps in the learning of the generator G. In the generator learning program, a program code which indicates each of part of the processing of the estimation module 103, the processing of the latent code acquisition module 105, the processing of the generated image generation module 106, the processing of the generation vector calculation module 107, and the processing of the generator learning module 108 is indicated. For example, the data storage module 100 stores a program for changing the latent code.

[Latent Code Acquisition Module]

The latent code acquisition module 105 acquires, for each feature of the GAN which allows the user to control the plurality of features relating to the generated image, the anchor latent code, the positive latent code changed in the portion corresponding to this feature of the anchor latent code, and the negative latent code changed in the portion corresponding to another feature of this anchor latent code.

For example, the latent code acquisition module 105 acquires the anchor latent code of a certain feature based on random noise. The latent code acquisition module 105 changes a portion which is out of the anchor latent code and corresponds to this feature, to thereby acquire the positive latent code of this feature. The latent code acquisition module 105 changes a portion which is out of the anchor latent code and corresponds to a feature other than this feature, to thereby acquire the negative latent code of this feature.

In the example of FIG. 7, processing of acquiring, by the latent code acquisition module 105, each of an anchor latent code of the viewpoint, the positive latent code of the viewpoint, and the negative latent code of the viewpoint is illustrated. For example, when the latent code has 200 dimensions, a 1st dimension to a 50th dimension form a portion corresponding to the viewpoint. A 51st dimension to a 100th dimension form a portion corresponding to the global identity. A 101st dimension to a 150th dimension form a portion corresponding to the local identity. A 151st dimension to a 200th dimension form a portion corresponding to the color. The numbers of dimensions of those features may not be the same as one another. For example, the portion corresponding to the viewpoint may have 60 dimensions, and the portion corresponding to the global identity may have 40 dimensions.

For example, the latent code acquisition module 105 changes the portion of the 1st dimension to the 50th dimension corresponding to the viewpoint of the anchor latent code of the viewpoint, to thereby obtain the positive latent code of the viewpoint. This change may randomly be made, or a predetermined change may be made. The latent code acquisition module 105 changes a portion other than the portion of the 1st dimension to the 50th dimension corresponding to the viewpoint (in the example of FIG. 7, the portion of the 101st dimension to the 150th dimension corresponding to the local identity) of the anchor latent code of the viewpoint, to thereby obtain the negative latent code of the viewpoint. This change may also randomly be made, or a predetermined change may be made.

For example, the latent code acquisition module 105 changes the portion of the 51st dimension to the 100th dimension corresponding to the global identity of the anchor latent code of the global identity, to thereby obtain the positive latent code of the global identity. This change may randomly be made, or a predetermined change may be made. The latent code acquisition module 105 changes a portion other than the portion of the 51st dimension to the 100th dimension corresponding to the global identity of the anchor latent code of the global identity, to thereby obtain the negative latent code of the global identity. This change may also randomly be made, or a predetermined change may be made.

For example, the latent code acquisition module 105 changes the portion of the 101st dimension to the 150th dimension corresponding to the local identity of the anchor latent code of the local identity, to thereby obtain the positive latent code of the local identity. This change may randomly be made, or a predetermined change may be made. The latent code acquisition module 105 changes a portion other than the portion of the 101st dimension to the 150th dimension corresponding to the local identity of the anchor latent code of the local identity, to thereby obtain the negative latent code of the local identity. This change may also randomly be made, or a predetermined change may be made.

For example, the latent code acquisition module 105 changes the portion of the 151st dimension to the 200th dimension corresponding to the color of the anchor latent code of the color, to thereby obtain the positive latent code of the color. This change may randomly be made, or a predetermined change may be made. The latent code acquisition module 105 changes a portion other than the portion of the 151st dimension to the 200th dimension corresponding to the color of the anchor latent code of the color, to thereby obtain the negative latent code of the color. This change may also randomly be made, or a predetermined change may be made.

In this embodiment, a plurality of anchor latent codes are acquired for each feature. From each anchor latent code, at least one positive latent code and at least one negative latent code are generated, and hence the latent code acquisition module 105 acquires, for each feature, a plurality of anchor latent codes, a plurality of positive latent codes, and a plurality of negative latent codes. An acquisition method for each anchor latent code, each positive latent code, and each negative latent code is as described above.

In this embodiment, the case in which the latent code acquisition module 105 generates the positive latent code and the negative latent code is exemplified, but the positive latent code and the negative latent code may be generated by another computer other than the learning terminal 10. In the generated image database DB2, the positive latent code and the negative latent code generated by the another computer may be stored. In this case, the learning terminal 10 is not required to have the function of generating the positive latent code and the negative latent code.

[Generated Image Generation Module]

The generated image generation module 106 generates, for each feature, based on the generator G of the GAN, an anchor generated image corresponding to the anchor latent code of this feature, a positive generated image corresponding to the positive latent code of this feature, and a negative generated image corresponding to the negative latent code of this feature. The anchor generated image is an image generated by inputting the anchor latent code to the generator G. The positive generated image is an image generated by inputting the positive latent code to the generator G. The negative generated image is an image generated by inputting the negative latent code to the generator G.

For example, the generated image generation module 106 inputs the anchor latent code of a certain feature to the generator G being trained. The generator G converts the anchor latent code of this feature to an intermediate anchor latent code as required. This conversion is not required to be executed. The generator G applies processing such as convolution to the anchor latent code, and outputs, as the anchor generated image, an image corresponding to a result of this processing. This series of processing steps may be similar to publicly-known internal processing of the generator G of the GAN.

For example, the generated image generation module 106 inputs the positive latent code of a certain feature to the generator G being trained. The generator G converts the positive latent code of this feature to an intermediate positive latent code as required. This conversion is not required to be executed. The generator G applies processing such as convolution to the positive latent code, and outputs, as the positive generated image, an image corresponding to a result of this processing. This series of processing steps may be similar to publicly-known internal processing of the generator G of the GAN.

For example, the generated image generation module 106 inputs the negative latent code of a certain feature to the generator G being trained. The generator G converts the negative latent code of this feature to an intermediate negative latent code as required. This conversion is not required to be executed. The generator G applies processing such as convolution to the negative latent code, and outputs, as the negative generated image, an image corresponding to a result of this processing. This series of processing steps may be similar to publicly-known internal processing of the generator G of the GAN.

In this embodiment, the plurality of features are the three or more features, and hence the generated image generation module 106 may acquire, for each feature, a plurality of negative generated images changed in other features different from one another. For example, the generated image generation module 106 inputs, to the generator G, each of the plurality of negative latent codes acquired for one certain anchor latent code. The generator G generates the negative generated image based on each of the plurality of negative latent codes. The generated image generation module 106 acquires the plurality of negative generated images output from the generator G.

In this embodiment, the plurality of anchor latent codes are acquired for each feature, and hence the generated image generation module 106 generates, for each feature, the anchor generated image corresponding to each of the plurality of anchor latent codes of this feature, the positive generated image corresponding to each of the plurality of positive latent codes of this feature, and the negative generated image corresponding to each of the plurality of negative latent codes of this feature. That is, the generated image acquisition module acquires, for each feature, the plurality of anchor generated images, the plurality of positive generated images, and the plurality of negative generated images. A generation method for each anchor generated image, each positive generated image, and each negative generated image is as described above.

[Generation Vector Calculation Module]

The generation vector calculation module 107 calculates, for each feature space corresponding to each of the plurality of features, based on the discriminator D that has been trained by the discriminator learning module 104, an anchor generation vector relating to the anchor generated image of this feature, a positive generation vector relating to the positive generated image of this feature, and a negative generation vector relating to the negative generated image of this feature. The processing by the generation vector calculation module 107 is the same as the processing by the discrimination vector calculation module 102, but is different in whether the image input to the discriminator D is the discrimination image or the generated image.

For example, the generation vector calculation module 107 inputs, to the discriminator D, the anchor generated image of a certain feature. The generation vector calculation module 107 acquires, based on the output from the discriminator D, the anchor generation vector in the feature space corresponding to this feature. The generation vector calculation module 107 inputs, to the discriminator D, the positive generated image of a certain feature. The generation vector calculation module 107 acquires, based on the output from the discriminator D, the positive generation vector in the feature space corresponding to this feature. The generation vector calculation module 107 inputs, to the discriminator D, the negative generated image of a certain feature. The generation vector calculation module 107 acquires, based on the output from the discriminator D, the negative generation vector in the feature space corresponding to this feature.

In this embodiment, it is assumed that the anchor generated image, the positive generated image, and the negative generated image in the feature space are defined by Equation 11, Equation 12, and Equation 13, respectively. The symbol $D_{\tau+}$ of each of Equation 11, Equation 12, and Equation 13, as in Equation 3, Equation 4, and Equation 5, is mapping (calculation of the feature vector) in the feature space corresponding to the selected change $\tau^+$.

[Equation 11]

$$\xi_i = D_{\tau+}\big(G(z)\big)$$

[Equation 12]

$$\xi_i^+ = D_{\tau+}\big(G(z^+)\big)$$

[Equation 13]

$$\xi_i^- = D_{\tau+}\big(G(z^-)\big)$$

When a plurality of negative generated images changed in other features different from one another are acquired for each feature, the generation vector calculation module 107 may calculate, for each feature space corresponding to each of the plurality of features, the negative generation vector of each of the plurality of negative generated images of this feature. That is, when a plurality of negative generated images exist for one certain anchor generated image, the generation vector calculation module 107 may calculate the negative generation vector of each of the plurality of negative generated images.

In this embodiment, the plurality of anchor latent codes are acquired for each feature, and hence the generation vector calculation module 107 calculates, for each feature space corresponding to each of the plurality of features, the anchor generation vector of the anchor generated image corresponding to each of the plurality of anchor latent codes of this feature, the positive generation vector of each of the plurality of positive generated images of this feature, and the negative generation vector of each of the plurality of negative generated images of this feature. That is, the generation vector calculation module 107 calculates, for each feature space corresponding to each of the plurality of features, the anchor generation vector of each of the plurality of anchor generated images of this feature, the positive generation vector of each of the plurality of positive generated images of this feature, and the negative generation vector of each of the plurality of negative generated images of this feature. A calculation method for each anchor generation vector, each positive generation vector, and each negative generation vector is as described above.

[Estimation Module]

The estimation module 103 causes the discriminator D to estimate the authenticity of each of the plurality of anchor generated images. For example, the estimation module 103 inputs the anchor generated image to the discriminator D. The discriminator D calculates the feature vector of the anchor generated image in the feature space for the discrimination of the authenticity. The discriminator D outputs the estimation result of the authenticity based on this feature vector. The estimation module 103 acquires the estimation result of the authenticity output from the discriminator D. The estimation method itself for the authenticity may be a publicly-known method.

[Generator Learning Module]

The generator learning module 108 executes the learning of the generator G such that, in the feature space corresponding to each of the plurality of changes, the anchor generation vector and the positive generation vector approach each other, and the anchor generation vector and the negative generation vector become distant from each other. In other words, the generator learning module 108 executes the learning of the generator G such that, in the feature space corresponding to each of the plurality of features, the anchor generation vector and the positive generation vector belong to the same cluster, and the anchor generation vector and the negative generation vector do not belong to the same cluster.

An algorithm itself for the learning may be a publicly-known algorithm used for the metric learning. For example, for the learning of the generator G, an algorithm such as the gradient descent method may be used. In this embodiment, a mutual relationship among three generated images is used for the learning, and hence the generator learning module 108 executes, based on a loss function of the triplet margin loss, the learning of the generator G such that the anchor generation vector and the positive generation vector approach each other, and the anchor generation vector and the negative generation vector become distant from each other. The loss function as described in this embodiment is an example of a loss function of the triplet margin loss.

For example, the generator learning module 108 adjusts, in the feature space corresponding to each of the plurality of features, the parameters of the generator G such that the anchor generation vector and the positive generation vector approach each other, and the anchor generation vector and the negative generation vector become distant from each other, to thereby execute the learning of the generator G. The generator learning module 108 calculates, based on the loss function in the metric learning, in the feature space corresponding to each of the plurality of features, a loss indicating closeness between the anchor generation vector and the positive generation vector and farness between the anchor generation vector and the negative generation vector, and adjusts the parameters of the generator G such that this loss decreases.

For example, the generator learning module 108 adjusts, in the feature space corresponding to the viewpoint, the parameters of the generator G such that the anchor generation vector of the anchor generated image of the viewpoint and the positive generation vector of the positive generated image of the viewpoint approach each other, and this anchor generation vector and the negative generation vector of the negative generated image of the viewpoint become distant from each other, to thereby execute the learning of the generator G. The generator learning module 108 calculates, based on the loss function in the metric learning, in the feature space corresponding to the viewpoint, a loss indicating closeness between the anchor generation vector and the positive generation vector and farness between the anchor generation vector and the negative generation vector, and adjusts the parameters of the generator G such that this loss decreases.

In the example of FIG. 8, a state of the feature space corresponding to the viewpoint is illustrated. For example, through the learning, a distance between the anchor generated image $G(z_1)$ of the viewpoint and the positive generated

image $G(z_1{}^+)$ of the viewpoint becomes shorter, resulting in those generated images belonging to the same cluster. Through the learning, a distance between the anchor generated image $G(z_1)$ of the viewpoint and the negative generated image $G(z_1{}^-)$ of the viewpoint becomes longer, resulting in those generated images not belonging to the same cluster. In this embodiment, through the learning, a distance between the anchor generated image $G(z_1)$ of the viewpoint and each of the other anchor generated images $G(z_2)$ to $G(z_4)$ of the viewpoint becomes longer, resulting in those discrimination images not belonging to the same cluster. For the feature space other than the feature space corresponding to the viewpoint, the same learning is executed.

For example, the generator learning module 108 adjusts, in the feature space corresponding to the global identity, the parameters of the generator G such that the anchor generation vector of the anchor generated image of the global identity and the positive generation vector of the positive generated image of the global identity approach each other, and this anchor generation vector and the negative generation vector of the negative generated image of the global identity become distant from each other, to thereby execute the learning of the generator G. The generator learning module 108 calculates, based on the loss function in the metric learning, in the feature space corresponding to the global identity, a loss indicating closeness between the anchor generation vector and the positive generation vector and farness between the anchor generation vector and the negative generation vector, and adjusts the parameters of the generator G such that this loss decreases.

For example, the generator learning module 108 adjusts, in the feature space corresponding to the local identity, the parameters of the generator G such that the anchor generation vector of the anchor generated image of the local identity and the positive generation vector of the positive generated image of the local identity approach each other, and this anchor generation vector and the negative generation vector of the negative generated image of the local identity become distant from each other, to thereby execute the learning of the generator G. The generator learning module 108 calculates, based on the loss function in the metric learning, in the feature space corresponding to the local identity, a loss indicating closeness between the anchor generation vector and the positive generation vector and farness between the anchor generation vector and the negative generation vector, and adjusts the parameters of the generator G such that this loss decreases.

For example, the generator learning module 108 adjusts, in the feature space corresponding to the color, the parameters of the generator G such that the anchor generation vector of the anchor generated image of the color and the positive generation vector of the positive generated image of the color approach each other, and this anchor generation vector and the negative generation vector of the negative generated image of the color become distant from each other, to thereby execute the learning of the generator G. The generator learning module 108 calculates, based on the loss function in the metric learning, in the feature space corresponding to the color, a loss indicating closeness between the anchor generation vector and the positive generation vector and farness between the anchor generation vector and the negative generation vector, and adjusts the parameters of the generator G such that this loss decreases.

In this embodiment, the generator learning module 108 calculates, for each anchor generated image, a contrastive generation loss relating to the closeness between the anchor generation vector of this anchor generated image and the positive generation vector of the positive generated image of this anchor generated image and the closeness between the anchor generation vector of this anchor generated image and the negative generation vector of the negative generated image of this anchor generated image. The generator learning module 108 executes the learning of the generator G based on the contrastive generation loss. The generator learning module 108 executes the learning of the generator G such that the contrastive generation loss decreases.

The contrastive generation loss is a contrastive loss calculated based on the generated image. The contrastive loss is a loss used in the similarity learning. The contrastive loss is a loss which causes pieces of data in the same class to approach each other and causes pieces of data in different classes to become distant from each other. As a calculation expression itself for the contrastive loss, a publicly-known calculation expression can be used. In this embodiment, the generator learning module 108 calculates the contrastive generation loss based on Equation 14. Equation 14 is an example of an expression for evaluating each of a difference between the anchor generated image and the positive generated image, a difference between the anchor generated image and the negative generated image, and a difference between the anchor generated image and another anchor generated image. Values of $\varepsilon$ and $\alpha$ of Equation 14 and values of $\varepsilon$ and $\alpha$ of Equation 6 may be the same as each other, or different from each other, respectively.

[Equation 14]

$$\delta_i = -\log \frac{exp(\xi_i^T \xi_i^+ / \epsilon)}{exp(\xi_i^T \xi_i^+ / \epsilon) + exp(\xi_i^T \xi_i^- / \epsilon) + \alpha \sum_{j \neq i}^{B} exp(\xi_i^T \xi_j^- / \epsilon)}$$

The generator learning module 108 executes the learning of the generator G such that, in the feature space corresponding to each of the plurality of features, the anchor generation vector of each of the plurality of anchor generated images and the positive generation vector of the positive generated image of this anchor generated image approach each other, the anchor generation vector of this anchor generated image and the negative generation vector of the negative generated image of this anchor generated image become distant from each other, and the anchor generation vector of this anchor generated image and the anchor generation vector of another anchor generated image become distant from each other. The portion "the anchor generation vector of this anchor generated image and the anchor generation vector of another anchor generated image become distant from each other" is defined in a portion subsequent to $\alpha$ in the example of Equation 14.

For example, the generator learning module 108 calculates a batchwise generation loss relating to an average of the contrastive generation losses each calculated for one of the plurality of anchor generated images. The batchwise generation loss is a loss reflecting the batch size. For example, the generator learning module 108 calculates the batchwise generation loss based on Equation 15. The generator learning module 108 executes the learning of the generator G based on the batchwise generation loss. The generator learning module 108 executes the learning of the generator G such that the batchwise generation loss decreases.

[Equation 15]

$$L_{cl}^{G} = \frac{1}{B} \sum_{i=1}^{B} \delta_i$$

The calculation expression of the batchwise generation loss is not limited to Equation 15. For example, a weighting coefficient may be defined for each batch. The batchwise generation loss may be a sum instead of an average as given by Equation 15. The generator learning module 108 may, instead of calculating the batchwise generation loss, execute the learning of the generator G based on the contrastive loss.

In this embodiment, the generator learning module 108 executes the learning of the generator G based further on an estimation result of the authenticity of the anchor generated image. For example, the generator learning module 108 executes the learning of the generator G based further on an estimation result of the authenticity of each of a plurality of anchor generated images. The generator learning module 108 calculates the adversarial generation loss based on Equation 16. The adversarial generation loss is an adversarial loss used for the learning of the generator G. The generator learning module 108 executes the learning of the generator G based on the adversarial generation loss. The generator learning module 108 executes the learning of the generator G such that the adversarial generation loss decreases.

[Equation 16]

$$L_{adv}^{G} = -\frac{1}{B} \sum_{i=1}^{B} \log D\bigl(G(z_i)\bigr)$$

The calculation expression of the adversarial generation loss is not limited to Equation 16. The adversarial generation loss is only required to be a loss for such learning that the generator G and the discriminator D are adversarial to each other. For example, in Equation 16, an average of the batch sizes is obtained, but instead of obtaining the average, a sum may be used as the adversarial generation loss. The calculation expression of the adversarial generation loss may be another publicly-known calculation expression employed in the GAN. The adversarial generation loss is not required to be used for the learning of the generator G.

In this embodiment, the generator learning module 108 calculates a final loss based on Equation 17. The generator learning module 108 executes the learning of the generator G based on the final loss. The generator learning module 108 executes the learning of the generator G such that the final loss decreases. The symbol $\lambda_{cl}$ of Equation 17 is the hyperparameter. The value of $\lambda_{cl}$ of Equation 17 and the value $\lambda_{cl}$ of Equation 10 may be the same. In this case, a coefficient of the adversarial generation loss may be larger than a coefficient of the batchwise generation loss. The value of $\lambda_{cl}$ of Equation 17 and the value $\lambda_{cl}$ of Equation 10 may be different from each other.

[Equation 17]

$$L^{G} = L_{adv}^{G} + \lambda_{cl} L_{cl}^{G}$$

When a plurality of negative generated images changed in other features different from one another are generated for each feature, the generator learning module 108 may execute the learning of the generator G such that, in the feature space corresponding to each of the plurality of features, the anchor generation vector and the negative generation vector of each of the plurality of negative generated images become distant from each other.

[4. Processing Executed in Learning System]

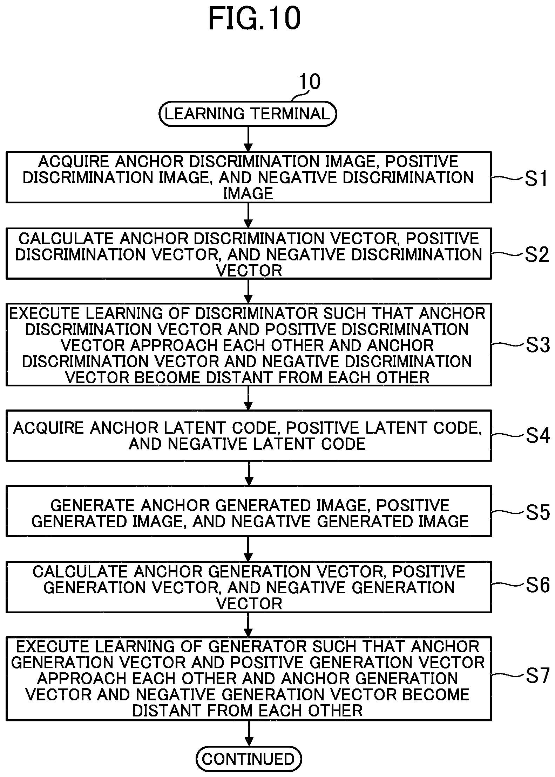

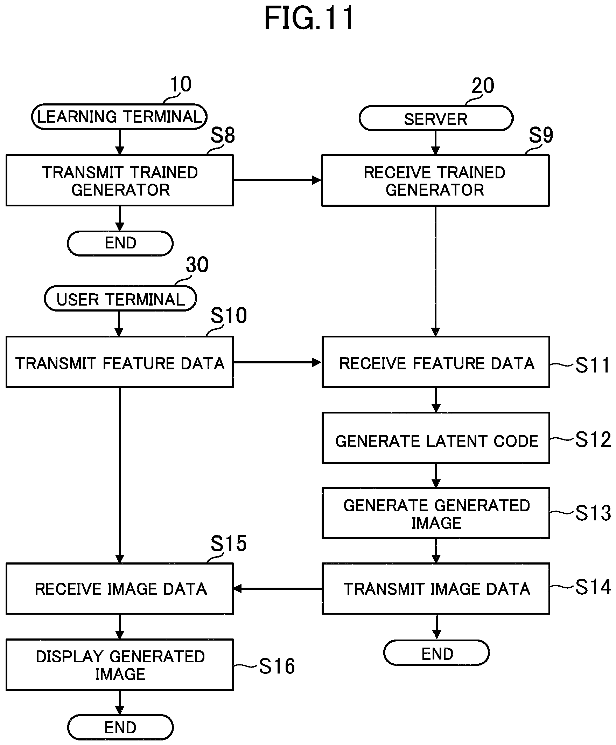

FIG. 10 and FIG. 11 are flowcharts for illustrating an example of processing executed in the learning system 1. The processing of FIG. 10 and FIG. 11 is executed by the control units 11, 21, and 31 executing the programs stored in the storage units 12, 22, and 32, respectively. In FIG. 10 and FIG. 11, processing for the learning of the discriminator D, processing for the learning of the generator G, and processing for use of the trained generator G are illustrated as a series of processing steps, but those pieces of processing may independently be executed.

As illustrated in FIG. 10, the learning terminal 10 acquires the anchor discrimination image, the positive discrimination image, and the negative discrimination image for each feature based on the discrimination image database DB1 (Step S1). The learning terminal 10 calculates the anchor discrimination vector, the positive discrimination vector, and the negative discrimination vector for each feature space corresponding to each of the plurality of features (Step S2).

The learning terminal 10 executes the learning of the discriminator D such that, in the feature space corresponding to each of the plurality of features, the anchor discrimination vector and the positive discrimination vector approach each other, and the anchor discrimination vector and the negative discrimination vector become distant from each other (Step S3). In Step S3, the learning terminal 10 calculates the various losses based on Equation 6 to Equation 9. The learning terminal 10 calculates the final loss based on Equation 10. The learning terminal 10 executes the learning of the discriminator D such that the final loss decreases.

The learning terminal 10 acquires the anchor latent code, the positive latent code, and the negative latent code for each feature (Step S4). The learning terminal 10 generates, for each feature, the anchor generated image, the positive generated image, and the negative generated image based on each of the anchor latent code, the positive latent code, and the negative latent code and the generator G (Step S5). The learning terminal 10 calculates the anchor generation vector, the positive generation vector, and the negative generation vector based on the discriminator D for each feature space corresponding to each of the plurality of features (Step S6).

The learning terminal 10 executes the learning of the generator G such that, in the feature space corresponding to each of the plurality of features, the anchor generation vector and the positive generation vector approach each other, and the anchor generation vector and the negative generation vector become distant from each other (Step S7). In Step S7, the learning terminal 10 calculates the various losses based on Equation 14 to Equation 16. The learning terminal 10 calculates the final loss based on Equation 17. The learning terminal 10 executes the learning of the generator G such that the final loss decreases.

With now reference to FIG. 11, the learning terminal 10 transmits the trained generator G to the server 20 (Step S8). In Step S8, the learning terminal 10 may transmit, to the server 20, the trained discriminator D together with the trained generator G. When the server 20 receives the trained generator G from the learning terminal 10 (Step S9), the server 20 records the trained generator G in the storage unit 22. The user terminal 30 transmits, to the server 20, feature data indicating a feature specified by the user (Step S10).

When the server 20 receives the feature data from the user terminal 30 (Step S11), the server 20 generates the latent code corresponding to the feature indicated by the feature data (Step S12). The server 20 generates the generated image based on the latent code and the trained generator G (Step S13). The server 20 transmits, to the user terminal 30, image data indicating the generated image (Step S14). The user terminal 30 receives the image data from the server 20 (Step S15). The user terminal 30 displays, based on the image data, the generated image on the display unit 35 (Step S16), and this processing is finished.

[5. Summary of Embodiment]

The learning system 1 according to this embodiment acquires, for each feature, the anchor discrimination image, the positive discrimination image, and the negative discrimination image. The learning system 1 calculates, for each feature space corresponding to each of the plurality of features, based on the discriminator D, the anchor discrimination vector relating to the anchor discrimination image of this feature, the positive discrimination vector relating to the positive discrimination image of this feature, and the negative discrimination vector relating to the negative discrimination image of this feature. The learning system 1 executes the learning of the discriminator D such that, in the feature space corresponding to each of the plurality of features, the anchor discrimination vector and the positive discrimination vector approach each other, and the anchor discrimination vector and the negative discrimination vector become distant from each other. As a result, the learning system 1 can reduce labor for the learning of the discriminator D. For example, the learning system 1 can reduce the labor for the learning of the discriminator D without requiring the manual labeling of the discrimination image or the use of a pre-trained classification model. Moreover, the learning system 1 executes, in one go, the preparation of the images to be learned by the discriminator D and the learning of the discriminator D through use of those images, to thereby achieve efficient learning. The learning system 1 also achieves the increase in accuracy of the discriminator D through this learning.

Moreover, the learning system 1 acquires, for each feature, the plurality of negative discrimination images changed in other features different from one another. The learning system 1 calculates, for each feature space corresponding to each of the plurality of features, the negative discrimination vector of each of the plurality of negative discrimination images of this feature. The learning system 1 executes the learning of the discriminator D such that, in the feature space corresponding to each of the plurality of features, the anchor discrimination vector and the negative discrimination vector of each of the plurality of negative discrimination images become distant from each other. As a result, the learning system 1 can generate the plurality of negative discrimination images increased in number, and hence can further reduce the labor for the learning of the GAN. The accuracy of the discriminator D also increases more.

Moreover, the learning system 1 calculates the contrastive discrimination loss for each anchor discrimination image. The learning system 1 calculates the batchwise discrimination loss relating to the average of the contrastive discrimination losses each calculated for one of the plurality of anchor discrimination images. The learning system 1 executes the learning of the discriminator D based on the batchwise discrimination loss. As a result, the learning system 1 can execute the learning of the GAN based on the batchwise discrimination loss integrally reflecting the plurality of anchor discrimination images. As a result, the accuracy of the discriminator D increases.

Moreover, the learning system 1 executes the learning of the discriminator D such that, in the feature space corresponding to each of the plurality of features, the anchor discrimination vector of each of the plurality of anchor discrimination images and the positive discrimination vector of the positive discrimination image of this anchor discrimination image approach each other, the anchor discrimination vector of this anchor discrimination image and the negative discrimination vector of the negative discrimination image of this anchor discrimination image become distant from each other, and the anchor discrimination vector of this anchor discrimination image and the anchor discrimination vector of another anchor discrimination image become distant from each other. As a result, the learning system 1 can achieve the learning reflecting the relationship among the anchor discrimination images, and hence can further reduce the labor for the learning of the GAN. The accuracy of the discriminator D also increases more.

Moreover, the learning system 1 causes the discriminator D to estimate the authenticity of the anchor discrimination image and the authenticity of the generated image generated by the generator G of the GAN. The learning system 1 executes the learning of the discriminator D based further on the estimation result of the authenticity of the anchor discrimination image and the estimation result of the authenticity of the generated image generated by the generator G. As a result, the learning system 1 can achieve the learning reflecting the estimation result of the authenticity obtained by the discriminator D, and hence can further reduce the labor for the learning of the GAN. The accuracy of the discriminator D also increases more.

Moreover, the learning system 1 causes the discriminator D to estimate the authenticity of each of the plurality of anchor discrimination images. The learning system 1 executes the normalization relating to the estimation result of the authenticity of each of the plurality of anchor discrimination images. The learning system 1 executes the learning of the discriminator D based further on the execution result of this normalization. As a result, the learning system 1 can achieve the learning reflecting the normalized estimation result of the authenticity obtained by the discriminator D, and hence can further reduce the labor for the learning of the GAN. The accuracy of the discriminator D also increases more. The learning system 1 can further reduce the labor for the learning of the GAN.

Moreover, the learning system 1 acquires the anchor latent code, the positive latent code, and the negative latent code for each feature. The learning system 1 generates, for each feature, based on the generator G, the anchor generated image corresponding to the anchor latent code of this feature, the positive generated image corresponding to the positive latent code of this feature, and the negative generated image corresponding to the negative latent code of this feature. The learning system 1 calculates, for each feature space corresponding to each of the plurality of features, based on the trained discriminator D, the anchor generation vector relating to the anchor generated image of this feature, the positive generation vector relating to the positive generated image of this feature, and the negative generation vector relating to the negative generated image of this feature. The learning system 1 executes the learning of the generator G such that, in the feature space corresponding to each of the plurality of changes, the anchor generation vector and the positive generation vector approach each other, and the anchor generation vector and the negative generation vector become distant from each other. As a result, the learning system 1 can further reduce the labor for the learning of the generator G. For example, the learning system 1 can reduce the labor for the learning of the generator G without requiring the manual preparation of each of the plurality of latent codes or the use of a pre-trained classification model. Moreover, the learning system 1 executes, in one go, the preparation of the images to be learned by the generator G and the learning of the generator G through use of those images, to thereby achieve effective learning. The learning system 1 also achieves the increase in accuracy of the generator G through this learning.

Moreover, the learning system 1 acquires, for each feature, the plurality of negative generated images changed in other features different from one another. The learning system 1 calculates, for each feature space corresponding to each of the plurality of features, the negative generation vector of each of the plurality of negative generated images of this feature. The learning system 1 executes the learning of the generator G such that, in the feature space corresponding to each of the plurality of features, the anchor generation vector and the negative generation vector of each of the plurality of negative generated images become distant from each other. As a result, the learning system 1 can generate the plurality of negative generated images increased in number, and can thus further reduce the labor for the learning of the GAN. The accuracy of the generator G also increases more.

Moreover, the learning system 1 calculates the contrastive generation loss for each anchor generated image. The learning system 1 calculates the batchwise generation loss relating to the average of the contrastive generation losses each calculated for one of the plurality of anchor generated images. The learning system 1 executes the learning of the generator G based on the batchwise generation loss. As a result, the learning system 1 can execute the learning of the GAN based on the batchwise generation loss integrally reflecting the plurality of anchor generated images. As a result, the accuracy of the generator G increases.

Moreover, the learning system 1 executes the learning of the generator G such that, in the feature space corresponding to each of the plurality of features, the anchor generation vector of each of the plurality of anchor generated images and the positive generation vector of the positive generated image of this anchor generated image approach each other, the anchor generation vector of this anchor generated image and the negative generation vector of the negative generated image of this anchor generated image become distant from each other, and the anchor generation vector of this anchor generated image and the anchor generation vector of another anchor generated image become distant from each other. As a result, the learning system 1 can achieve the learning reflecting the relationship among the anchor generated images, and hence can further reduce the labor for the learning of the GAN. The accuracy of the generator G also increases more.

Moreover, the learning system 1 causes the discriminator D to estimate the authenticity of the anchor generated image. The learning system 1 executes the learning of the generator G based further on the estimation result of the authenticity of the anchor generated image. As a result, the learning system 1 can achieve the learning reflecting the estimation result of the authenticity obtained by the discriminator D, and hence can further reduce the labor for the learning of the GAN. The accuracy of the generator G also increases more.

[6. Modification Examples]

The present disclosure is not limited to the above-mentioned embodiment. The present disclosure may appropriately be modified without departing from the purport of the present disclosure.

For example, the processing for the learning of the discriminator D and the processing for the learning of the generator G may be executed by separate computers. A first learning terminal 10 may execute the processing for the learning of the discriminator D and a second learning terminal 10 may execute the processing for the learning of the generator G. For example, the processing described as being executed by the learning terminal 10 may be executed by the server 20, the user terminal 30, or another computer. The processing described as being executed by the learning terminal 10 may be distributed to a plurality of computers.

[7. Supplementary Notes]

For example, the learning system may be configured as described below.

(1) A learning system, including:

a discrimination image acquisition module configured to acquire, for each feature of a generative adversarial network (GAN) which allows a user to control a plurality of features relating to a generated image, an anchor discrimination image, a positive discrimination image changed in the each feature from the anchor discrimination image, and a negative discrimination image changed in another feature from the anchor discrimination image;
a discrimination vector calculation module configured to calculate, for each feature space corresponding to each of the plurality of features, based on a discriminator of the GAN, an anchor discrimination vector relating to the anchor discrimination image of the each of the plurality of features, a positive discrimination vector relating to the positive discrimination image of the each of the plurality of features, and a negative discrimination vector relating to the negative discrimination image of the each of the plurality of features; and
a discriminator learning module configured to execute learning of the discriminator such that, in the feature space corresponding to each of the plurality of features, the anchor discrimination vector and the positive discrimination vector approach each other, and the anchor discrimination vector and the negative discrimination vector become distant from each other.

(2) The learning system according to Item (1),

wherein the plurality of features are three or more features,

wherein the discrimination image acquisition module is configured to acquire, for the each feature, a plurality of the negative discrimination images changed in other features different from one another,

wherein the discrimination vector calculation module is configured to calculate, for each feature space corresponding to each of the plurality of features, the negative discrimination vector of each of the plurality of the negative discrimination images of the each of the plurality of features, and

wherein the discriminator learning module is configured to execute the learning of the discriminator such that, in the feature space corresponding to each of the plurality of features, the anchor discrimination vector and the negative discrimination vector of each of the plurality of the negative discrimination images become distant from each other.

(3) The learning system according to Item (1) or (2),

wherein the discrimination image acquisition module is configured to acquire, for the each feature, a plurality of the anchor discrimination images, a plurality of the positive discrimination images, and a plurality of the negative discrimination images,

wherein the discrimination vector calculation module is configured to calculate, for each feature space corresponding to each of the plurality of features, the anchor discrimination vector of each of the plurality of the anchor discrimination images of the each of the plurality of features, the positive discrimination vector of each of the plurality of the positive discrimination images of the each of the plurality of features, and the negative discrimination vector of each of the plurality of the negative discrimination images of the each of the plurality of features, and

wherein the discriminator learning module is configured to:

calculate, for each anchor discrimination image, a contrastive discrimination loss relating to closeness between the anchor discrimination vector of the each anchor discrimination image and the positive discrimination vector of the positive discrimination image of the each anchor discrimination image and closeness between the anchor discrimination vector of the each anchor discrimination image and the negative discrimination vector of the negative discrimination image of the each anchor discrimination image;

calculate a batchwise discrimination loss relating to an average of the contrastive discrimination losses each calculated for one of the plurality of the anchor discrimination images; and

execute the learning of the discriminator based on the batchwise discrimination loss.

(4) The learning system according to any one of Items (1) to (3),

wherein the discrimination image acquisition module is configured to acquire, for the each feature, a plurality of the anchor discrimination images, a plurality of the positive discrimination images, and a plurality of the negative discrimination images,

wherein the discrimination vector calculation module is configured to calculate, for each feature space corresponding to each of the plurality of features, the anchor discrimination vector of each of the plurality of the anchor discrimination images of the each of the plurality of features, the positive discrimination vector of each of the plurality of the positive discrimination images of the each of the plurality of features, and the negative discrimination vector of each of the plurality of the negative discrimination images of the each of the plurality of features, and

wherein the discriminator learning module is configured to execute the learning of the discriminator such that, in the feature space corresponding to each of the plurality of features, the anchor discrimination vector of each of the plurality of the anchor discrimination images and the positive discrimination vector of the positive discrimination image of the each of the plurality of the anchor discrimination images approach each other, the anchor discrimination vector of the each of the plurality of the anchor discrimination images and the negative discrimination vector of the negative discrimination image of the each of the plurality of the anchor discrimination images become distant from each other, and the anchor discrimination vector of the each of the plurality of the anchor discrimination images and the anchor discrimination vector of another anchor discrimination image become distant from each other.

(5) The learning system according to any one of Items (1) to (4), further including an estimation module configured to cause the discriminator to estimate authenticity of the anchor discrimination image and authenticity of the generated image generated by a generator of the GAN,

wherein the discriminator learning module is configured to execute the learning of the discriminator based further on an estimation result of the authenticity of the anchor discrimination image and an estimation result of the authenticity of the generated image generated by the generator.

(6) The learning system according to any one of Items (1) to (5), further including an estimation module configured to cause the discriminator to estimate authenticity of each of a plurality of the anchor discrimination images, wherein the discriminator learning module is configured to execute normalization relating to an estimation result of the authenticity of each of the plurality of the anchor discrimination images, and to execute the learning of the discriminator based further on an execution result of the normalization.

(7) A learning system, including:

a latent code acquisition module configured to acquire, for each feature of a generative adversarial network (GAN) which allows a user to control a plurality of features relating to a generated image, an anchor latent code, a positive latent code obtained by changing a portion of the anchor latent code corresponding to the each feature, and a negative latent code obtained by changing a portion of the anchor latent code corresponding to another feature;

a generated image generation module configured to generate, for the each feature, based on a generator of the GAN, an anchor generated image corresponding to the anchor latent code of the each feature, a positive generated image corresponding to the positive latent code of the each feature, and a negative generated image corresponding to the negative latent code of the each feature;

a generation vector calculation module configured to calculate, for each feature space corresponding to each of the plurality of features, based on the discriminator that has been trained by the discriminator learning module as described in Item (1), an anchor generation vector relating to the anchor generated image of the each of the plurality of features, a positive generation vector relating to the positive generated image of the each of the plurality of features, and a negative generation vector relating to the negative generated image of the each of the plurality of features; and

a generator learning module configured to execute learning of the generator such that, in the feature space corresponding to each of the plurality of changes, the anchor generation vector and the positive generation vector approach each other, and the anchor generation vector and the negative generation vector become distant from each other.

(8) The learning system according to Item (7),

wherein the plurality of features are three or more features,
wherein the generated image generation module is configured to generate, for the each feature, a plurality of the negative generated images changed in other features different from one another,
wherein the generation vector calculation module is configured to calculate, for each feature space corresponding to each of the plurality of features, the negative generation vector of each of the plurality of the negative generated images of the each of the plurality of features, and
wherein the generator learning module is configured to execute the learning of the generator such that, in the feature space corresponding to each of the plurality of features, the anchor generation vector and the negative generation vector of each of the plurality of the negative generated images become distant from each other.

(9) The learning system according to Item (7) or (8),

wherein the latent code acquisition module is configured to acquire, for the each feature, a plurality of the anchor latent codes, a plurality of the positive latent codes, and a plurality of the negative latent codes,
wherein the generated image generation module is configured to generate, for the each feature, the anchor generated image corresponding to each of the plurality of the anchor latent codes of the each feature, the positive generated image corresponding to each of the plurality of the positive latent codes of the each feature, and the negative generated image corresponding to each of the plurality of the negative latent codes of the each feature,
wherein the generation vector calculation module is configured to calculate, for each feature space corresponding to each of the plurality of features, the anchor generation vector of the anchor generated image corresponding to each of the plurality of the anchor latent codes of the each of the plurality of features, the positive generation vector of each of the plurality of the positive generated images of the each of the plurality of features, and the negative generation vector of each of the plurality of the negative generated images of the each of the plurality of features, and
wherein the generator learning module is configured to:

calculate, for each anchor generated image, a contrastive generation loss relating to closeness between the anchor generation vector of the each anchor generated image and the positive generation vector of the positive generated image of the each anchor generated image and closeness between the anchor generation vector of the each anchor generated image and the negative generation vector of the negative generated image of the each anchor generated image;

calculate a batchwise generation loss relating to an average of the contrastive generation losses each calculated for one of the plurality of anchor generated images; and

execute the learning of the generator based on the batchwise generation loss.

(10) The learning system according to any one of Items (7) to (9),

wherein the generated image acquisition generation module is configured to acquire, for the each feature, a plurality of the anchor generated images, a plurality of the positive generated images, and a plurality of the negative generated images,

wherein the generation vector calculation module is configured to calculate, for each feature space corresponding to each of the plurality of features, the anchor generation vector of each of the plurality of the anchor generated images of the each of the plurality of features, the positive generation vector of each of the plurality of the positive generated images of the each of the plurality of features, and the negative generation vector of each of the plurality of the negative generated images of the each of the plurality of features, and

wherein the generator learning module is configured to execute the learning of the generator such that, in the feature space corresponding to each of the plurality of features, the anchor generation vector of each of the plurality of the anchor generated images and the positive generation vector of the positive generated image of the each of the plurality of the anchor generated images approach each other, the anchor generation vector of the each of the plurality of the anchor generated images and the negative generation vector of the negative generated image of the each of the plurality of the anchor generated images become distant from each other, and the anchor generation vector of the each of the plurality of the anchor generated images and the anchor generation vector of another anchor generated image become distant from each other.

(11) The learning system according to any one of Items (7) to (10), further including an estimation module configured to cause the discriminator to estimate authenticity of the anchor generated image,

wherein the generator learning module is configured to execute the learning of the generator based further on an estimation result of the authenticity of the anchor generated image.

## Claims

1. A learning system, comprising:

a discrimination image acquisition module (101) configured to acquire, for each feature of a generative adversarial network (GAN) which allows a user to control a plurality of features relating to a generated image, an anchor discrimination image, a positive discrimination image changed in the each feature from the anchor discrimination image, and a negative discrimination image changed in another feature from the anchor discrimination image;

a discrimination vector calculation module (102) configured to calculate, for each feature space corresponding to each of the plurality of features, based on a discriminator of the GAN, an anchor discrimination vector relating to the anchor discrimination image of the each of the plurality of features, a positive discrimination vector relating to the positive discrimination image of the each of the plurality of features, and a negative discrimination vector relating to the negative discrimination image of the each of the plurality of features; and

a discriminator learning module (104) configured to execute learning of the discriminator such that, in the feature space corresponding to each of the plurality of features, the anchor discrimination vector and the positive discrimination vector approach each other, and the anchor discrimination vector and the negative discrimination vector become distant from each other.

2. The learning system according to claim 1,

wherein the plurality of features are three or more features,

wherein the discrimination image acquisition module (101) is configured to acquire, for the each feature, a plurality of the negative discrimination images changed in other features different from one another,

wherein the discrimination vector calculation module (102) is configured to calculate, for each feature space corresponding to each of the plurality of features, the negative discrimination vector of each of the plurality of the negative discrimination images of the each of the plurality of features, and

wherein the discriminator learning module (104) is configured to execute the learning of the discriminator such that, in the feature space corresponding to each of the plurality of features, the anchor discrimination vector and the negative discrimination vector of each of the plurality of the negative discrimination images become distant from each other.

3. The learning system according to claim 1 or 2,

wherein the discrimination image acquisition module (101) is configured to acquire, for the each feature, a plurality of the anchor discrimination images, a plurality of the positive discrimination images, and a plurality of the negative discrimination images,

wherein the discrimination vector calculation module (102) is configured to calculate, for each feature space corresponding to each of the plurality of features, the anchor discrimination vector of each of the plurality of the anchor discrimination images of the each of the plurality of features, the positive discrimination vector of each of the plurality of the positive discrimination images of the each of the plurality of features, and the negative discrimination vector of each of the plurality of the negative discrimination images of the each of the plurality of features, and

wherein the discriminator learning module (104) is configured to:

calculate, for each anchor discrimination image, a contrastive discrimination loss relating to closeness between the anchor discrimination vector of the each anchor discrimination image and the positive discrimination vector of the positive discrimination image of the each anchor discrimination image and closeness between the anchor discrimination vector of the each anchor discrimination image and the negative discrimination vector of the negative discrimination image of the each anchor discrimination image;

calculate a batchwise discrimination loss relating to an average of the contrastive discrimination losses each calculated for one of the plurality of the anchor discrimination images; and

execute the learning of the discriminator based on the batchwise discrimination loss.

4. The learning system according to any one of claims 1 to 3,

wherein the discrimination image acquisition module (101) is configured to acquire, for the each feature, a plurality of the anchor discrimination images, a plurality of the positive discrimination images, and a plurality of the negative discrimination images,

wherein the discrimination vector calculation module (102) is configured to calculate, for each feature space corresponding to each of the plurality of features, the anchor discrimination vector of each of the plurality of the anchor discrimination images of the each of the plurality of features, the positive discrimination vector of each of the plurality of the positive discrimination images of the each of the plurality of features, and the negative discrimination vector of each of the plurality of the negative discrimination images of the each of the plurality of features, and

wherein the discriminator learning module (104) is configured to execute the learning of the discriminator such that, in the feature space corresponding to each of the plurality of features, the anchor discrimination vector of each of the plurality of the anchor discrimination images and the positive discrimination vector of the positive discrimination image of the each of the plurality of the anchor discrimination images approach each other, the anchor discrimination vector of the each of the plurality of the anchor discrimination images and the negative discrimination vector of the negative discrimination image of the each of the plurality of the anchor discrimination images become distant from each other, and the anchor discrimination vector of the each of the plurality of the anchor discrimination images and the anchor discrimination vector of another anchor discrimination image become distant from each other.

5. The learning system according to any one of claims 1 to 4, further comprising an estimation module (103) configured to cause the discriminator to estimate authenticity of the anchor discrimination image and authenticity of the generated image generated by a generator of the GAN,

wherein the discriminator learning module (104) is configured to execute the learning of the discriminator based further on an estimation result of the authenticity of the anchor discrimination image and an estimation result of the authenticity of the generated image generated by the generator.

6. The learning system according to any one of claims 1 to 5, further comprising an estimation module (103) configured to cause the discriminator to estimate authenticity of each of a plurality of the anchor discrimination images,
wherein the discriminator learning module (104) is configured to execute normalization relating to an estimation result of the authenticity of each of the plurality of the anchor discrimination images, and to execute the learning of the discriminator based further on an execution result of the normalization.

7. The learning system according to any one of claims 1 to 6, further comprising:

a latent code acquisition module (105) configured to acquire, for the each feature, an anchor latent code, a positive latent code obtained by changing a portion of the anchor latent code corresponding to the each feature, and a negative latent code obtained by changing a portion of the anchor latent code corresponding to another feature;
a generated image generation module (106) configured to generate, for the each feature, based on a generator of the GAN, an anchor generated image corresponding to the anchor latent code of the each feature, a positive generated image corresponding to the positive latent code of the each feature, and a negative generated image corresponding to the negative latent code of the each feature;
a generation vector calculation module (107) configured to calculate, for each feature space corresponding to each of the plurality of features, based on the discriminator that has been trained by the discriminator learning module (104), an anchor generation vector relating to the anchor generated image of the each of the plurality of features, a positive generation vector relating to the positive generated image of the each of the plurality of features, and a negative generation vector relating to the negative generated image of the each of the plurality of features; and
a generator learning module (108) configured to execute learning of the generator such that, in the feature space corresponding to each of the plurality of changes, the anchor generation vector and the positive generation vector approach each other, and the anchor generation vector and the negative generation vector become distant from each other.

8. The learning system according to claim 7,

wherein the plurality of features are three or more features,
wherein the generated image generation module (106) is configured to generate, for the each feature, a plurality of the negative generated images changed in other features different from one another,
wherein the generation vector calculation module (107) is configured to calculate, for each feature space corresponding to each of the plurality of features, the negative generation vector of each of the plurality of the negative generated images of the each of the plurality of features, and
wherein the generator learning module (108) is configured to execute the learning of the generator such that, in the feature space corresponding to each of the plurality of features, the anchor generation vector and the negative generation vector of each of the plurality of the negative generated images become distant from each other.

9. The learning system according to claim 7 or 8,

wherein the latent code acquisition module (105) is configured to acquire, for the each feature, a plurality of the anchor latent codes, a plurality of the positive latent codes, and a plurality of the negative latent codes,
wherein the generated image generation module (106) is configured to generate, for the each feature, the anchor generated image corresponding to each of the plurality of the anchor latent codes of the each feature, the positive generated image corresponding to each of the plurality of the positive latent codes of the each feature, and the negative generated image corresponding to each of the plurality of the negative latent codes of the each feature,
wherein the generation vector calculation module (107) is configured to calculate, for each feature space corresponding to each of the plurality of features, the anchor generation vector of the anchor generated image corresponding to each of the plurality of the anchor latent codes of the each of the plurality of features, the positive generation vector of each of the plurality of the positive generated images of the each of the plurality of features, and the negative generation vector of each of the plurality of the negative generated images of the each of the plurality of features, and
wherein the generator learning module (108) is configured to:

calculate, for each anchor generated image, a contrastive generation loss relating to closeness between the anchor generation vector of the each anchor generated image and the positive generation vector of the positive generated image of the each anchor generated image and closeness between the anchor generation vector of the each anchor generated image and the negative generation vector of the negative generated image of the each anchor generated image;
calculate a batchwise generation loss relating to an average of the contrastive generation losses each calculated for one of the plurality of anchor generated images; and
execute the learning of the generator based on the batchwise generation loss.

10. The learning system according to any one of claims 7 to 9,

wherein the generated image generation module (106) is configured to acquire, for the each feature, a plurality of the anchor generated images, a plurality of the positive generated images, and a plurality of the negative generated images,
wherein the generation vector calculation module (107) is configured to calculate, for each feature space corresponding to each of the plurality of features, the anchor generation vector of each of the plurality of the anchor generated images of the each of the plurality of features, the positive generation vector of each of the plurality of the positive generated images of the each of the plurality of features, and the negative generation vector of each of the plurality of the negative generated images of the each of the plurality of features, and
wherein the generator learning module (108) is configured to execute the learning of the generator such that, in the feature space corresponding to each of the plurality of features, the anchor generation vector of each of the plurality of the anchor generated images and the positive generation vector of the positive generated image of the each of the plurality of the anchor generated images approach each other, the anchor generation vector of the each of the plurality of the anchor generated images and the negative generation vector of the negative generated image of the each of the plurality of the anchor generated images become distant from each other, and the anchor generation vector of the each of the plurality of the anchor generated images and the anchor generation vector of another anchor generated image become distant from each other.

11. The learning system according to any one of claims 7 to 10, further comprising an estimation module (103) configured to cause the discriminator to estimate authenticity of the anchor generated image,
wherein the generator learning module (108) is configured to execute the learning of the generator based further on an estimation result of the authenticity of the anchor generated image.

12. A learning method of executing, by a computer:

a discrimination image acquisition step of acquiring, for each feature of a generative adversarial network (GAN) which allows a user to control a plurality of features relating to a generated image, an anchor discrimination image, a positive discrimination image changed in the each feature from the anchor discrimination image, and a negative discrimination image changed in another feature from the anchor discrimination image;
a discrimination vector calculation step of calculating, for each feature space corresponding to each of the plurality of features, based on a discriminator of the GAN, an anchor discrimination vector relating to the anchor discrimination image of the each of the plurality of features, a positive discrimination vector relating to the positive discrimination image of the each of the plurality of features, and a negative discrimination vector relating to the negative discrimination image of the each of the plurality of features; and
a discriminator learning step of executing learning of the discriminator such that, in the feature space corresponding to each of the plurality of features, the anchor discrimination vector and the positive discrimination vector approach each other, and the anchor discrimination vector and the negative discrimination vector become distant from each other.

13. A program for causing a computer to function as:

a discrimination image acquisition module (101) configured to acquire, for each feature of a generative adversarial network (GAN) which allows a user to control a plurality of features relating to a generated image, an anchor discrimination image, a positive discrimination image changed in the each feature from the anchor discrimination image, and a negative discrimination image changed in another feature from the anchor discrimination image;
a discrimination vector calculation module (102) configured to calculate, for each feature space corresponding to each of the plurality of features, based on a discriminator of the GAN, an anchor discrimination vector relating to the anchor discrimination image of the each of the plurality of features, a positive discrimination vector relating to the positive discrimination image of the each of the plurality of features, and a negative discrimination vector relating to the negative discrimination image of the each of the plurality of features; and
a discriminator learning module (104) configured to execute learning of the discriminator such that, in the feature space corresponding to each of the plurality of features, the anchor discrimination vector and the positive discrimination vector approach each other, and the anchor discrimination vector and the negative discrimination vector become distant from each other.

# FIG.1

# FIG.2

LATENT CODE → GENERATOR (G) → GENERATED IMAGE → DISCRIMINATOR (D) → real/fake

EP 4 530 926 A1

# FIG.3

10

LEARNING
TERMINAL          100

DATA STORAGE
MODULE

GAN

DISCRIMINATOR — D

GENERATOR — G

DISCRIMINATION
IMAGE DATABASE — DB1

GENERATED IMAGE
DATABASE — DB2

DISCRIMINATION IMAGE
ACQUISITION MODULE — 101

DISCRIMINATION
VECTOR CALCULATION
MODULE — 102

ESTIMATION MODULE — 103

DISCRIMINATOR
LEARNING MODULE — 104

LATENT CODE
ACQUISITION MODULE — 105

GENERATED IMAGE
GENERATION MODULE — 106

GENERATION VECTOR
CALCULATION MODULE — 107

GENERATOR
LEARNING MODULE — 108

# FIG.4

FIG.5

# FIG.6

DB1

| FEATURE DISCRIMINATION INFORMATION | ANCHOR DISCRIMINATION IMAGE | POSITIVE DISCRIMINATION IMAGE | NEGATIVE GENERATED IMAGE |
|---|---|---|---|
| VIEWPOINT | ANCHOR DISCRIMINATION IMAGE 1 | POSITIVE DISCRIMINATION IMAGE 1 (IMAGE CHANGED IN VIEWPOINT OF ANCHOR DISCRIMINATION IMAGE 1) | POSITIVE DISCRIMINATION IMAGE 1 (IMAGE CHANGED IN ANOTHER FEATURE OTHER THAN VIEWPOINT OF ANCHOR DISCRIMINATION IMAGE 1) |
| GLOBAL IDENTITY | ANCHOR DISCRIMINATION IMAGE 2 | POSITIVE DISCRIMINATION IMAGE 2 (IMAGE CHANGED IN GLOBAL IDENTITY OF ANCHOR DISCRIMINATION IMAGE 2) | POSITIVE DISCRIMINATION IMAGE 2 (IMAGE CHANGED IN ANOTHER FEATURE OTHER THAN GLOBAL IDENTITY OF ANCHOR DISCRIMINATION IMAGE 2) |
| LOCAL IDENTITY | ANCHOR DISCRIMINATION IMAGE 3 | POSITIVE DISCRIMINATION IMAGE 3 (IMAGE CHANGED IN LOCAL IDENTITY OF ANCHOR DISCRIMINATION IMAGE 3) | POSITIVE DISCRIMINATION IMAGE 3 (IMAGE CHANGED IN ANOTHER FEATURE OTHER THAN LOCAL IDENTITY OF ANCHOR DISCRIMINATION IMAGE 3) |
| COLOR | ANCHOR DISCRIMINATION IMAGE 4 | POSITIVE DISCRIMINATION IMAGE 4 (IMAGE CHANGED IN COLOR OF ANCHOR DISCRIMINATION IMAGE 4) | POSITIVE DISCRIMINATION IMAGE 4 (IMAGE CHANGED IN ANOTHER FEATURE OTHER THAN COLOR OF ANCHOR DISCRIMINATION IMAGE 4) |
| . . . | . . . | . . . | . . . |

# FIG.7

# FIG.8

EP 4 530 926 A1

# FIG.9

DB2

| FEATURE DISCRIMINATION INFORMATION | ANCHOR DISCRIMINATION IMAGE | POSITIVE DISCRIMINATION IMAGE | NEGATIVE GENERATED IMAGE |
|---|---|---|---|
| VIEWPOINT | ANCHOR DISCRIMINATION IMAGE 1 | POSITIVE DISCRIMINATION IMAGE 1 (IMAGE GENERATED BASED ON POSITIVE LATENT CODE CHANGED IN PORTION CORRESPONDING TO VIEWPOINT OF ANCHOR LATENT CODE) | POSITIVE DISCRIMINATION IMAGE 1 (IMAGE GENERATED BASED ON NEGATIVE LATENT CODE CHANGED IN PORTION CORRESPONDING TO ANOTHER FEATURE OTHER THAN VIEWPOINT OF ANCHOR LATENT CODE) |
| GLOBAL IDENTITY | ANCHOR DISCRIMINATION IMAGE 2 | POSITIVE DISCRIMINATION IMAGE 2 (IMAGE GENERATED BASED ON POSITIVE LATENT CODE CHANGED IN PORTION CORRESPONDING TO GLOBAL IDENTITY OF ANCHOR LATENT CODE) | POSITIVE DISCRIMINATION IMAGE 2 (IMAGE GENERATED BASED ON NEGATIVE LATENT CODE CHANGED IN PORTION CORRESPONDING TO ANOTHER FEATURE OTHER THAN GLOBAL IDENTITY OF ANCHOR LATENT CODE) |
| LOCAL IDENTITY | ANCHOR DISCRIMINATION IMAGE 3 | POSITIVE DISCRIMINATION IMAGE 3 (IMAGE GENERATED BASED ON POSITIVE LATENT CODE CHANGED IN PORTION CORRESPONDING TO LOCAL IDENTITY OF ANCHOR LATENT CODE) | POSITIVE DISCRIMINATION IMAGE 3 (IMAGE GENERATED BASED ON NEGATIVE LATENT CODE CHANGED IN PORTION CORRESPONDING TO ANOTHER FEATURE OTHER THAN LOCAL IDENTITY OF ANCHOR LATENT CODE) |
| COLOR | ANCHOR DISCRIMINATION IMAGE 4 | POSITIVE DISCRIMINATION IMAGE 4 (IMAGE GENERATED BASED ON POSITIVE LATENT CODE CHANGED IN PORTION CORRESPONDING TO COLOR OF ANCHOR LATENT CODE) | POSITIVE DISCRIMINATION IMAGE 4 (IMAGE GENERATED BASED ON NEGATIVE LATENT CODE CHANGED IN PORTION CORRESPONDING TO ANOTHER FEATURE OTHER THAN COLOR OF ANCHOR LATENT CODE) |
| . . . | . . . | . . . | . . . |

# FIG.10

10

(LEARNING TERMINAL)

| ACQUIRE ANCHOR DISCRIMINATION IMAGE, POSITIVE DISCRIMINATION IMAGE, AND NEGATIVE DISCRIMINATION IMAGE | S1 |

| CALCULATE ANCHOR DISCRIMINATION VECTOR, POSITIVE DISCRIMINATION VECTOR, AND NEGATIVE DISCRIMINATION VECTOR | S2 |

| EXECUTE LEARNING OF DISCRIMINATOR SUCH THAT ANCHOR DISCRIMINATION VECTOR AND POSITIVE DISCRIMINATION VECTOR APPROACH EACH OTHER AND ANCHOR DISCRIMINATION VECTOR AND NEGATIVE DISCRIMINATION VECTOR BECOME DISTANT FROM EACH OTHER | S3 |

| ACQUIRE ANCHOR LATENT CODE, POSITIVE LATENT CODE, AND NEGATIVE LATENT CODE | S4 |

| GENERATE ANCHOR GENERATED IMAGE, POSITIVE GENERATED IMAGE, AND NEGATIVE GENERATED IMAGE | S5 |

| CALCULATE ANCHOR GENERATION VECTOR, POSITIVE GENERATION VECTOR, AND NEGATIVE GENERATION VECTOR | S6 |

| EXECUTE LEARNING OF GENERATOR SUCH THAT ANCHOR GENERATION VECTOR AND POSITIVE GENERATION VECTOR APPROACH EACH OTHER AND ANCHOR GENERATION VECTOR AND NEGATIVE GENERATION VECTOR BECOME DISTANT FROM EACH OTHER | S7 |

(CONTINUED)

# FIG.11

```
  ┌─────────────────┐                        ┌─────────────────┐
  │ LEARNING TERMINAL│ 10                     │     SERVER      │ 20
  └─────────────────┘                        └─────────────────┘
           │              S8                           │              S9
           ▼                                           ▼
  ┌─────────────────┐                        ┌─────────────────┐
  │ TRANSMIT TRAINED│───────────────────────▶│ RECEIVE TRAINED │
  │    GENERATOR    │                        │    GENERATOR    │
  └─────────────────┘                        └─────────────────┘
           │                                           │
           ▼                                           │
      ┌────────┐                                       │
      │  END   │                                       │
      └────────┘                                       │
  ┌─────────────────┐  30                              │
  │  USER TERMINAL  │                                  │
  └─────────────────┘  S10                             │
           │                                           ▼
           ▼                                  ┌─────────────────┐
  ┌─────────────────┐                        │  RECEIVE FEATURE │  S11
  │ TRANSMIT FEATURE│───────────────────────▶│       DATA       │
  │      DATA       │                        └─────────────────┘
  └─────────────────┘                                  │
           │                                           ▼
           │                                  ┌─────────────────┐
           │                                  │ GENERATE LATENT │  S12
           │                                  │      CODE       │
           │                                  └─────────────────┘
           │                                           │
           │                                           ▼
           │                                  ┌─────────────────┐
           │                                  │GENERATE GENERATED│  S13
           │        S15                       │      IMAGE       │
           │                                  └─────────────────┘
           ▼                                           │
  ┌─────────────────┐                        ┌─────────────────┐
  │  RECEIVE IMAGE  │◀───────────────────────│ TRANSMIT IMAGE  │  S14
  │      DATA       │                        │      DATA        │
  └─────────────────┘                        └─────────────────┘
           │                                           │
           ▼                                           ▼
  ┌─────────────────┐                             ┌────────┐
  │ DISPLAY GENERATED│  S16                        │  END   │
  │      IMAGE       │                            └────────┘
  └─────────────────┘
           │
           ▼
      ┌────────┐
      │  END   │
      └────────┘
```

Europäisches Patentamt

European Patent Office

Office européen des brevets

# EUROPEAN SEARCH REPORT

**Application Number**

EP 24 20 3127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHOSHAN ALON ET AL: "GAN-Control: Explicitly Controllable GANs", 2021 IEEE/CVF INTERNATIONAL CONFERENCE ON COMPUTER VISION (ICCV), IEEE, 10 October 2021 (2021-10-10), pages 14063-14073, XP034092635, DOI: 10.1109/ICCV48922.2021.01382 [retrieved on 2022-02-10] * Sections 3 and 4 * | 1-13 | INV.<br>G06N3/045<br>G06N3/0475<br>G06N3/094 |
| A | BANERJEE SANDIPAN ET AL: "The Universal Face Encoder: Learning Disentangled Representations Across Different Attributes", 2023 IEEE/CVF CONFERENCE ON COMPUTER VISION AND PATTERN RECOGNITION WORKSHOPS (CVPRW), IEEE, 17 June 2023 (2023-06-17), pages 1071-1080, XP034397654, DOI: 10.1109/CVPRW59228.2023.00114 [retrieved on 2023-08-14] * Sections 3-6 * | 1-13 | |
| A | MIJEOONG KIM ET AL: "ContraNeRF: 3D-Aware Generative Model via Contrastive Learning with Unsupervised Implicit Pose Embedding", ARXIV.ORG, CORNELL UNIVERSITY LIBRARY, 201 OLIN LIBRARY CORNELL UNIVERSITY ITHACA, NY 14853, 27 April 2023 (2023-04-27), XP091495851, * Section 3 * | 1-13 | |

**TECHNICAL FIELDS SEARCHED (IPC)**

G06N

-/--

The present search report has been drawn up for all claims

| Place of search | Date of completion of the search | Examiner |
|---|---|---|
| The Hague | 18 February 2025 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 24 20 3127

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOU YUXIN ET AL: "Learning Attribute-driven Disentangled Representations for Interactive Fashion Retrieval", 2021 IEEE/CVF INTERNATIONAL CONFERENCE ON COMPUTER VISION (ICCV), IEEE, 10 October 2021 (2021-10-10), pages 12127-12137, XP034093131, DOI: 10.1109/ICCV48922.2021.01193 [retrieved on 2022-02-10] * Section 3 *<br>- - - - - | 1-13 | |

TECHNICAL FIELDS
SEARCHED     (IPC)

The present search report has been drawn up for all claims

| Place of search | Date of completion of the search | Examiner |
|---|---|---|
| The Hague | 18 February 2025 | Jacobs, Jan-Pieter |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TERO KARRAS** ; **MIIKA AITTALA** ; **SAMULI LAINE** ; **ERIK HARKONEN** ; **JANNE HELLSTEN** ; **JAAKKO LEHTINEN** ; **TIMO AILA**. Alias-free generative adversarial networks. *Advances in Neural Information Processing Systems*, 2021, vol. 34, 852-863
- **TERO KARRAS** ; **SAMULI LAINE** ; **TIMO AILA**. A style-based generator architecture for generative adversarial networks. *Proceedings of the IEEE/CVF conference on computer vision and pattern recognition*, 2019, 4401-4410

- **TERO KARRAS** ; **SAMULI LAINE** ; **MIIKA AITTALA** ; **JANNE HELLSTEN** ; **JAAKKO LEHTINEN** ; **TIMO AILA**. Analyzing and improving the image quality of StyleGAN. *Proceedings of the IEEE/CVF conference on computer vision and pattern recognition*, 2020, 8110-8119